(19)

Europäisches
Patentamt
European
Patent Office
Office européen
des brevets

(11) **EP 2 587 728 A2**

(12) **EUROPEAN PATENT APPLICATION**
published in accordance with Art. 153(4) EPC

(43) Date of publication:
**01.05.2013 Bulletin 2013/18**

(21) Application number: **11798389.0**

(22) Date of filing: **22.06.2011**

(51) Int Cl.:
***H04L 12/24*** (2006.01)          ***H04L 12/12*** (2006.01)
***H04L 12/14*** (2006.01)          ***H02J 13/00*** (2006.01)

(86) International application number:
**PCT/KR2011/004576**

(87) International publication number:
**WO 2011/162554 (29.12.2011 Gazette 2011/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2010  PCT/IB2010/003388
16.07.2010  KR 20100069192
08.07.2010  KR 20100065824
26.06.2010  KR 20100060892
22.06.2010  KR 20100058918**

(71) Applicant: **LG Electronics Inc.
Yeongdeungpo-gu
Seoul 150-721 (KR)**

(72) Inventors:
 • **AHN, Junho**
  **Seoul 153-802 (KR)**
 • **SEO, Daegeun**
  **Seoul 153-802 (KR)**
 • **CHEONG, Dalho**
  **Seoul 153-802 (KR)**
 • **JANG, Bongmun**
  **Seoul 153-802 (KR)**
 • **KIM, Yanghwan**
  **Seoul 153-802 (KR)**
 • **LEE, Hoonbong**
  **Seoul 153-802 (KR)**

 • **LEE, Koonseok**
  **Seoul 153-802 (KR)**
 • **KANG, Daeho**
  **Seoul 153-802 (KR)**
 • **PARK, Kyungyong**
  **Seoul 153-802 (KR)**
 • **SEO, Moonseok**
  **Seoul 153-802 (KR)**
 • **SON, Changwoo**
  **Seoul 153-802 (KR)**
 • **LEE, Sungyong**
  **Seoul 153-802 (KR)**
 • **LEE, Wookjin**
  **Seoul 153-802 (KR)**
 • **JANG, Yongwoon**
  **Seoul 153-802 (KR)**
 • **CHOI, Moonsuk**
  **Seoul 153-802 (KR)**
 • **HAN, Jinwook**
  **Seoul 153-802 (KR)**
 • **HWANG, Hyejin**
  **Seoul 153-802 (KR)**

(74) Representative: **Urner, Peter
ter Meer Steinmeister & Partner GbR
Mauerkircherstrasse 45
81679 München (DE)**

(54) **COMPONENT FOR NETWORK SYSTEM AND METHOD FOR CONTROLLING SAME**

(57)    Provided are a component for network system and a method of controlling the same. The method includes: inputting a driving factor of the component or the other component; and predicting result information when the component or the other component is driven based on the inputted driving factor.

**EP 2 587 728 A2**

Fig.1

**Description**

**BACKGROUND**

The present invention relates to a component for network system and a method of controlling the same.

A supplier simply supplies an energy source such as electricity, water, gas, and so forth, and a demand source just uses the supplied energy source. Accordingly, efficient management is difficult in terms of energy production, energy distribution, or energy usage. Accordingly, a network system for effectively managing energy is required.

**SUMMARY**

Embodiments provide a component for a network system to effectively manage an energy source and a method of controlling the same.

In one embodiment, a method of controlling a component for a network system, which communicates with another component, is provided. The method includes: inputting a driving factor of the component or the other component; and predicting result information when the component or the other component is driven based on the inputted driving factor.

In another embodiment, a component for network system, which communicates with another component, is provided. The component includes: an input unit for inputting a driving factor of the component; a memory unit for storing basic information for predicting result information when the component is driven based on the driving factor inputted through the input unit; and a control unit for predicting result information when the component is driven based on the basic information stored in the memory unit.

In further another embodiment, a component for network system, which communicates with another component, is provided, the component includes: an input unit for inputting a driving factor of the other component; a memory unit for storing basic information for predicting result information when the other component is driven based on the driving factor inputted through the input unit; and a control unit for predicting result information when the component is driven based on the basic information stored in the memory unit.

The details of one or more embodiments are set forth in the accompanying drawings and the description below. Other features will be apparent from the description and drawings, and from the claims.

**BRIEF DESCRIPTION OF THE DRAWINGS**

Fig. 1 is a view schematically showing an example of a network system according to the present disclosure.

Fig. 2 is a block diagram schematically showing an example of the network system according to the present disclosure.

Fig. 3 is a block diagram showing an information transmission process on the network system according to the present disclosure.

Fig. 4 is a view showing the communication structure of two components that constitute the network system according to a first embodiment.

Fig. 5 is a block diagram showing the detailed configuration of a communication device that constitutes a communication unit.

Fig. 6 is a view showing a communication performing process between a specific component and a communication device according to the first embodiment .

Fig. 7 is a view showing a communication performing process between a specific component and a communication device according to a second embodiment.

Fig. 8 is a view showing the communication structure of components that constitute the network system according to a third embodiment.

Fig. 9 is a block diagram showing the detailed configuration of a first component in Fig. 8.

Fig. 10 is a view showing the communication structure of components that constitute the network system according to a fourth embodiment.

Fig. 11 is a block diagram showing the detailed configuration of a first component in Fig. 10.

Fig. 12 is a schematic diagram illustrating a configuration of a home network according to an embodiment of the present invention.

Fig. 13 is a block diagram illustrating a schematic configuration of an energy measurement unit according to an embodiment of the present invention.

Fig. 14 is a schematic view illustrating an information table for a power usage prediction of an energy consumption unit stored in a memory unit of an energy measurement unit.

Fig. 15 is a block diagram illustrating a schematic configuration of an energy consumption unit according to a first embodiment of the present invention.

Fig. 16 is a view illustrating another example of the information stored in the memory unit of the energy consumption unit of Fig. 15.

FIG. 17 is a flowchart illustrating a method of controlling an energy consumption unit according to a first embodiment of the present invention.

FIG. 18 is a flowchart illustrating a method of controlling an energy consumption unit according to a second embodiment of the present invention.

Fig. 19 is a graph illustrating one example of power information.

Fig. 20 is a graph illustrating reference information relating to the present invention.

Fig. 21 is a graph illustrating a high price time interval and low price time interval relating to the present invention.

Fig. 22 is a table illustrating reference information relating to the present invention.

Fig. 23 is a block diagram illustrating a cooking appliance, i.e. one example of an energy consumption unit.

Fig. 24 is a graph illustrating a rate change in power consumed for an operation of a cooking appliance according to a change in a power rate per unit power in the cooking appliance of Fig. 22.

FIG. 25 is a flowchart illustrating a method of controlling an energy consumption unit according to a third embodiment of the present invention.

Fig. 26 is a block diagram illustrating a schematic configuration of an energy consumption unit according to a fourth embodiment of the present invention.

Fig. 27 is a block diagram illustrating each configuration of an energy consumption unit according to a fifth embodiment of the present invention and a specific component communicating with the energy consumption unit.

## DETAILED DESCRIPTION OF THE EMBODIMENTS

Reference will now be made in detail to the embodiments of the present disclosure, examples of which are illustrated in the accompanying drawings.

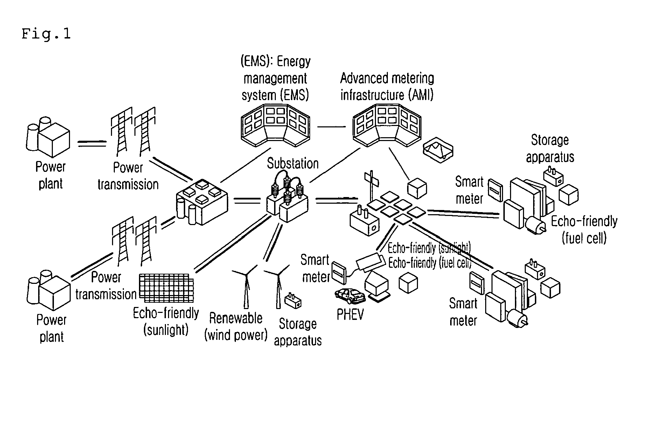

Fig. 1 is a view schematically showing an example of a network system according to the present disclosure.

The network system is a system for managing an energy source such as electricity, water or gas. The energy source means one of which amount generated or used can be metered. Therefore, even a source not mentioned above may be used as the energy source. Hereinafter, electricity will be described as an example of the energy source, and details of this specification may be identically applied to other energy sources.

Referring to Fig. 1, a network system according to an embodiment includes a power plant for producing electricity. The power plant may include a power plant for producing electricity through a thermal power generation or nuclear power generation and a power plant using water power, sunlight power, wind power or the like which is eco-friendly energy.

The electricity produced in the power plant is transmitted to a sub-control center through a power transmission line, and the sub-control center transmits the electricity to a substation so that the electricity is distributed to customers such as houses or offices.

Electricity produced by the eco-friendly energy is also transmitted to the substation so as to be distributed to each of the customers. The electricity transmitted from the substation is distributed to each of the offices or houses through electricity power storage, or is directly distributed to each of the offices or houses.

In a house using a home area network (HAN), electricity may be produced by itself through sunlight, fuel cells built in a plug-in hybrid electric vehicle (PHEV), or the like. Also, the produced electricity may be stored or distributed, or surplus electricity may be resold to the outside world.

The network system may include a smart meter for detecting the amount of electricity used in each customer (house, office or the like) in real time, and an advanced metering infrastructure (AMI) for metering the amount of electricity used in a plurality of customers.

The network system may further include an energy management system (EMS) for managing energy. The EMS may generate information on operations of one or more components with respect to energy (production of energy, distribution of energy, usage of energy, storage of energy, and the like). The EMS may generate at least a command for the operations of the components.

In this specification, a function or solution performed by the EMS may be referred to as an energy management function or energy management solution.

In the network system, one or more EMSs may be provided as a separate configuration, or the EMS may be included as an energy management function or energy management solution in one or more components.

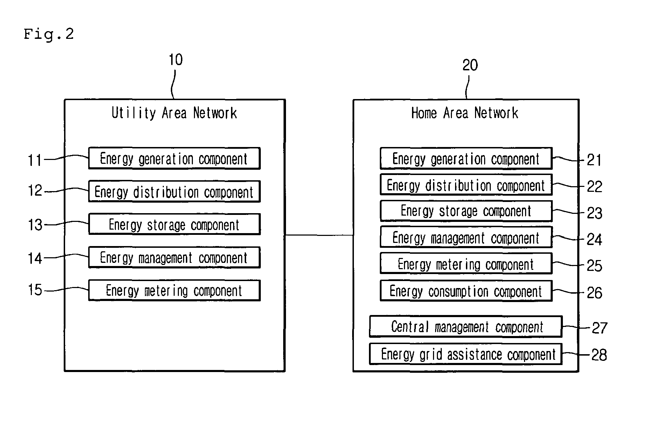

Fig. 2 is a block diagram schematically showing an example of the network system according to the present disclosure.

Referring to Figs. 1 and 2, the network system according to the present disclosure is configured by a plurality of components. For example, the components of the network system are a power plant, a substation, a sub-control center, an EMS, electric home appliances, a smart meter, a storage battery, a web server, an AMI, a home server, and the like.

In the present disclosure, each of the components may be configured by a plurality of sub-components. As an example, in a case of one component is an electric home appliance, sub-components may be a microcomputer (MICOM), a heater, a display and the like. That is, all that perform a specific function may be components in the present disclosure, and such components constitute the network system of the present disclosure. Two components may communicate with each other by means of a communication unit. One network may be one component or may be configured by a plurality of components.

In this specification, the network system in which communication information is related to an energy source may be referred to as an energy grid.

A network system according to an embodiment may include a utility area network (UAN) 10 and a home area network (HAN) 20. The UAN 10 and the HAN 20 may perform wired or wireless communication by means of a communication unit, and may perform two-way communication.

In this specification, the term "home" means not only a household as a lexical meaning but also a group in which specific components such as buildings or companies gather. Also, the term "utility" means a group in which specific components outside the home gather.

The UAN 10 includes an energy generation component 11 for generating energy, an energy distribution component 12 for distributing or transmitting energy, an energy storage component 13 for storing energy, an energy management component 14 for managing energy, and an energy metering component 15 for metering information related to energy.

In a case where one or more components that constitute the UAN 10 consume energy, the components that consume the energy may be energy consumption components.

The energy consumption component is a component corresponding to the energy consumption component 26 that constitutes the HAN 20. The energy consumption component may be the same component as the energy consumption component 26 or may be another component distinguished from the energy consumption component 26.

The energy generation component 11 may be a power plant as an example. The energy distribution component 12 distributes or transmits energy generated in the energy generation component 11 and/or energy stored in the energy storage component 13 to the energy consumption component 26 that consumes the energy. The energy distribution component 12 may be a power transmitter, substation, sub-control center, or the like.

The energy storage component 13 may be a storage battery, and the energy management component 14 generates information for driving one or more of the energy generation component 11, the energy distribution component 12, the energy storage component 13 and the energy consumption component 26, related to energy. The energy management component 14 may generate at least a command for the operation of a specific component.

The energy management component 14 may be an EMS. The energy metering component 15 may meter information related to the generation of energy, the distribution of energy, the usage of energy, the storage of energy, and the like. The energy metering component 15 may be an AMI as an example. The energy management component 14 may be a separate configuration, or may be included in another component as an energy management function.

The UAN 10 may communicate with the HAN 20 by a terminal component (not shown). That is, information generated or transferred in a specific component that constitutes the UAN 10 may be transmitted to the HAN 20 through the terminal component, or information generated or transferred in another component that constitutes the HAN 20 may be received to the UAN 10 through the terminal component. The terminal component may be a gate way as an example. The terminal component may be provided to one or more of the UAN 10 and the HAN 20.

The terminal component may be a component necessary for transmitting/receiving information between the UAN and the HAN.

Two components that constitute the UAN 10 may communicate with each other by means of a communication unit.

The HAN 20 includes an energy generation component 21 for generating energy, an energy distribution component 22 for distributing energy, an energy storage component 23 for storing energy, an energy management component 24 for managing energy, an energy metering component 25 for metering information related to energy, an energy consumption component 26 for consuming energy, a central management component 27 for controlling a plurality of components, and an energy grid assistance component 28.

The energy generation component 21 may be a home power generator, and the energy storage component 23 may be a storage battery. The energy management component 24 may be an EMS. As an example, the energy generation component 21 may be a solar cell, a fuel cell, a wind power generator, a power generator using subterranean heat, a power generator usng seawater, or the like.

The energy storage component 23 may perform storage using energy generated from the energy generation component 21. Therefore, in view of the use of energy, the energy storage component 23 and the energy generation component 11 may be an energy using component that uses energy together with the energy consumption component 26. That is, the energy using component may include at least an energy consumption component, an energy generation component and an energy storage component. In a case where the energy management component uses energy, it may be included in the energy using component.

In view of the supplied energy, the energy storage component 23, the energy consumption component and the energy generation component 11 may be an energy supplied component to which energy is supplied.

The energy metering component 25 may meter information related to the generation of energy, the distribution of energy, the usage of energy, the storage of energy, and the like. The energy metering component 25 may be a smart meter as an example. The energy consumption component 26 may be, as an example, an electric home appliance or a heater, motor, display or the like, which constitutes the electric home appliance. In this embodiment, there is no limitation in the kind of the energy consumption component 26.

Although not shown, the network system may include an accessory component or a consumable handling component. The accessory component may be an energy network-only component which performs an additional function for the energy network. For example, the accessory component may be an energy network-only weather reception antenna.

The consumable handling component may be a component for storing, supplying, and transferring a consumable and confirms and recognize information about the consumable. For example, the consumable may be a product or material which is used or handled during the operation of the component. Also, the consumable handling component may be managed in the energy network, e.g., the energy management component. For example, the consumable may be a washing cloth of a washing machine, a cooking item of a cooking appliance, or a detergent for cleaning the washing cloth in the washing machine, or a fiber conditioner, or seasoning for cooking item.

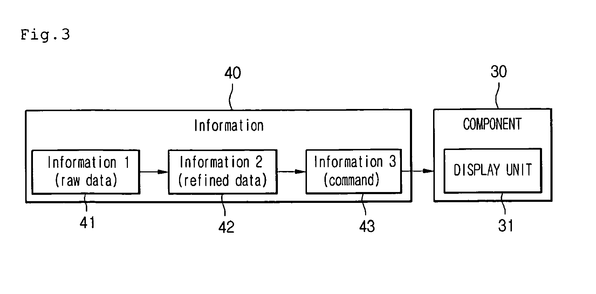

Fig. 3 is a block diagram showing an information transmission process on the network system according to the present disclosure.

Referring to Fig. 3, in the network system according to the present disclosure, a specific component 30 may receive information related to energy (hereinafter, referred to as energy information 40) by means of a communication unit. The specific component 30 may further receive additional information (environment information, time information and the like) by means of the communication unit. In this instance, the information may be received from another component. That is, at least energy information is contained in the received information.

The specific component 30 may be a component that constitutes the UAN 10 or a component that constitutes the HAN 20.

As described above, the energy information 40 may be one of information related to electricity, water, gas and the like. Hereinafter, information related to electricity will be described as an example of the energy information, but information related to other energy sources may be identically applied.

For example, the kind of information related to the electricity may include time-based pricing, curtailment, grid emergency, grid reliability, energy increment, operation priority, and the like.

The information may be divided into scheduled information previously produced based on previous information, and real-time information changed in real time. The scheduled information and the real-time information may be divided by whether or not predict information after the current time (in the future).

The energy information 40 may be transmitted/received as a true or false signal such as a Boolean signal on the network system, or may be transmitted/received as a real price. Alternatively, the energy information 40 may be transmitted/received by being divided into a plurality of levels.

The energy information 40 may be divided into time of use (TOU) information, critical peak pattern (CPP) information or real time pattern (RTP) information according to the change in the pattern of data with respect to time.

According to the TOU information, a data is changed step by step depending on time. According to the CPP information, a data is changed step by step or in real time depending on time, and emphasis is displayed at a specific point of time. According to RTP information, a data is changed in real time depending on time.

In a case where the energy information is time-based pricing information as an example, the time-based pricing information is changed. The time-based pricing information may be transmitted/received as a true or false signal such as a Boolean signal on the network system, or may be transmitted/received as a real price. Alternatively, the time-based pricing information may be transmitted/received by being divided into a plurality of levels.

In a case where the specific component 30 receives a true or false signal such as a Boolean signal, one signal may be recognized as an on-peak signal, and the other signal may be recognized as an off-peak signal.

Alternatively, the specific component 30 may recognize information on at least one drive, which contains the time-based information, and may recognize an on-peak or off-peak signal by comparing the value of the recognized information with the value of reference information.

For example, in a case where the specific component 30 recognizes information divided into levels or real pricing information, it recognizes an on-peak or off-peak signals by comparing the value of the recognized information with the value of reference information.

In this case, the value of the information on drive may be at least one of time-based pricing, electric energy, the variation of time-based pricing, the variation of electric energy, the average of time-based pricing and the average of electric energy. The value of reference information may be at least one of an average, the average between maximum and minimum values of power information during a predetermined period of time and the reference variation of power information during the predetermined period of time (e.g., the slope of consumed electric energy per unit time).

The value of reference information may be determined in real time or may be previously determined. The value of reference information may be determined on the UAN or may be determined on the HAN (a customer's direct input or an input from the energy management component, the central management component or the like).

In a case where the specific component 30 (e.g., the energy consumption component) recognizes an on-peak signal (e.g., at a point of time of recognition), an output may be determined as zero (stop or maintenance of a stop state) or may be decreased. If necessary, the output may be restored or increased. The driving scheme of the specific component may be previously determined before the specific component is operated, or may be changed when the specific component recognizes an on-peak signal posterior to the start of operation.

Alternatively, in a case where the specific component 30 recognizes an on-peak signal (e.g., at a point of time of recognition), the output is maintained under an operable condition. In this case, the operable condition means that the value of the information on drive is less than a predetermined reference. The value of the information on drive may be time-based pricing, consumed electric energy, operation time, or the like. The predetermined reference may be a relative or absolute value.

The predetermined reference may be determined in real time or may be previously determined. The predetermined reference may be determined on the UAN or may be determined on the HAN (a customer's direct input or an input from the energy management component, the central management component or the like).

Alternatively, in a case where the specific component 30 recognizes high-cost information, the output of the specific compoinent may be maintained or increased when the difference between a state information value and a reference value is within a predetermined range. For example, in a case where a compressor of a refrigerator is not operated in a low-cost section, the temperature of a cool chamber or freezing chamber is increased. Therefore, the compressor is necessarily turned on when the temperature of the cool chamber or freezing chamber approaches a reference temperature. In a case where a high-cost section comes after the compressor is turned on, the compressor maintains a current output when the difference between the temperature of the cool chamber or freezing chamber and the reference temperature is within a predetermined range. In a case where a user selects a button for cancelling power saving in the state that the specific component 30 recognizes the high-cost information, the output of the specific component may be maintained.

Alternatively, in a case where the specific component 30 recognizes an on-peak signal (e.g., at a point of time of recognition), the output may be increased. However, although the output is increased at the point of time when the specific component recognizes the on-peak signal, the total output amount of the specific component during the entire drive period may be decreased or maintained as compared with that when the specific component is operated at a normal output level. Alternatively, although the output is increased at the point of time when the specific component recognizes the on-peak signal, the total consumed power or total time-based pricing of the specific component during the entire operation period may be decreased as compared that when the specific component is operated at a normal output level.

In a case where the specific component 30 recognizes an off-peak signal (e.g., at a point of time of recognition), the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output (change in the state of cool air that is a medium for performing the function of the refrigerator). In a case where the specific component is a washing machine or washer, hot water may be stored by driving a heater earlier than the time when the heater is to be operated (storage of hot water that is an additional medium for performing the function of the washing machine or washer). Alternatively, in a case where the specific component is a refrigerator, cool air may be stored in a separate supercooling chamber by increasing an output as compared with the existing output. Alternatively, in a case where the specific component recognizes an off-peak signal (e.g., at a point of time of recognition), electricity may be stored.

The curtailment information is information related to a mode in which the specific component is stopped or a small amount of time-based pricing is taken. As an example, the curtailment information may be transmitted/received as a true or false signal such as a Boolean signal on the network system.

If the specific component 30 recognizes curtailment information, the output may be determined as zero (stop or maintenance of a stop state) or may be decreased as described above.

The grid emergency information is information related to a power failure or the like. As an example, the grid emergency information may be transmitted/received as a true or false signal such as a Boolean signal on the network system. The information related to a power failure or the like has a relation with the reliability of a component using energy.

In a case where the specific component 30 recognizes grid emergency information, it may be immediately shut down.

The grid reliability information is information related to the supply amount of electricity supplied or information related to the quality of electricity. The grid reliability information may be transmitted/received as a true or false signal such as a Boolean signal on the network system, or may be determined by a component (e.g., an electric home appliance) through the frequency of AC power supplied to the component.

That is, if a frequency lower than the frequency of AC power supplied to the component is sensed, it may be determined that the amount of electricity supplied is small (information on the deficiency of the amount of electricity supplied). If a frequency higher than the frequency of AC power supplied to the component is sensed, it may be determined that the amount of electricity supplied is large (information on the excess of the amount of electricity supplied).

In a case where the specific component recognizes shortage of the amount of electricity or poor quality of electricity in the grid reliability information, an output may be determined as zero (stop or maintenance of a stop state) or may be decreased. If necessary, the output may be restored or increased.

On the other hand, in a case where the specific component recognizes the information on the excess of the amount of electricity supplied, the output may be increased, or the operation may be converted from an off-state to an on-state.

The energy increment information is information related to a state that surplus electricity is generated because the amount of electricity used by a component is less than that of power generation. As an example, the energy increment information may be transmitted/received as a true or false signal such as a Boolean signal on the network system.

In a case where the specific component 30 recognizes energy increment information, the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output. In a case where the specific component is a washing machine or a washer, hot water may be stored by driving a heater earlier than the time when the heater is to be operated. Alternatively, in a case where the specific component recognizes an off-peak signal (e.g., at a point of time of recognition), electricity may be stored.

Meanwhile, in a case where the specific component 30 is the energy storage component 13 or 23, the energy storage component 13 or 23 may store electricity by receiving the electricity supplied from the UAN, for example, when electricity storage cost is smaller than a predetermined value.

However, in a case where the energy storage component 23 is connected to the energy generation component 21 that constitutes the HAN, it may continuously store energy generated by the energy generation component 21 until the electricity storage is completed. That is, the energy generated while the energy generation component 21 generates energy may be stored in the energy storage component 23.

The presence of completion of the electricity storage is determined while the energy storage component 13 or 23 stores electricity. In a case where the electricity storage is completed, the electricity supply for the electricity storage is cut off. Specifically, the presence of completion of the electricity storage may be determined using a sensor that senses the voltage, temperature or current of the energy storage component 13 or 23. The cutoff of the electricity supply may be performed using a switch (or circuit breaker) provided to a supply stage through which the electricity is supplied to the energy storage unit 13 or 23.

The electricity storage cost may be cost consumed in the electricity storage for a specific time period or electricity cost at a specific time.

As an example, in a case where the electricity storage cost is in an off-peak section (in a case where the specific component recognizes low-cost information which will be described later), the energy storage component 13 or 23 may store electricity. Alternatively, in a case where an on-peak section corresponds to an allowance section (in a case where the specific component recognizes high-cost information which will be described later), the energy storage component 13 or 23 may store in the on-peak section. In this instance, the allowance section is a section in which a power consumption information value is less than a predetermined reference. The power consumption information value may be a electricity cost, a power consumption amount, a time range, or the like. The predetermined reference may be a predetermined cost, a predetermined power consumption amount, a predetermined time, or the like. The predetermined reference may be a relative value or absolute value, and may be changed automatically or manually.

The energy storage component 13 or 23 may store a counter electromotive force generated when an energy consumption component that is rotatably operated or a motor provided to the energy consumption component is stopped (rotated).

Alternatively, the energy storage component 13 or 23 may store electricity using an energy consumption component that is rotatably operated or a motor provided to the energy consumption component. For example, in a case where the energy consumption component is a refrigerator, the energy storage component 13 or 23 may store electricity generated when a fan motor provided to the refrigerator is rotated (the fan motor may serve as a power generator or may be connected to the power generator). Alternatively, in a case where the energy consumption component is a washing machine, the energy storage component 13 or 23 may store electricity generated when a motor that rotates a drum for accommodating the laundry is rotated. In a case where the energy consumption component is a cooking appliance, the energy storage component 13 or 23 may store electricity generated when a motor for rotating a cooling fan is rotated. In a case where the energy consumption component is an air cleaner, the energy storage component 13 or 23 may store electricity generated when a motor for rotating a fan is rotated. That is, in this embodiment, in a case where a motor is provided regardless of the kind of the energy consumption component, the energy storage component 13 or 23 may store electricity generated when the motor is rotated. Alternatively, in a case where a power generator is connected to a fan rotated by the flow of air (natural flow or forcible flow), the energy storage component 13 or 23 may store electricity generaged by the power generator.

The electricity stored in the energy component 13 or 23 may be supplied to one or more energy consumption components 26. In a case where electricity cost is higher than a reference value, the electricity stored in the energy component 13 or 23 may be supplied to the energy consumption component 26. As an example, in a case where the electricity cost is an on-peak (in a case where the specific component recognizes the high-cost information), the electricity stored in the energy storage component 13 or 23 may be supplied to the energy consumption component 26. In a case where the electricity cost is an off-peak (in a case where the specific component recognizes the low-cost information) but is close to the on-peak, the electricity stored in the energy storage component 13 or 21 may be supplied to the energy consumption component. If the electricity stored in the energy storage component 13 or 23 is less than a predetermined value, electricity generated in the energy generation component 11 is supplied to the energy consumption component. Thus, it is possible to prevent the operation of the energy consumption component from being stopped due to the cutoff of the electricity supply while the energy consumption component is operated.

In a case where the supply of electricity generated in the energy generation component 11 is cut off by interruption of electric power, the electricity stored in the energy component 13 or 23 may be supplied to the energy consumption component. In a case where the energy consumption component is an electric product, the electricity stored in the energy storage component 13 or 23 may be supplied to a communication unit or control unit provided to the electric product.

The electricity stored in the energy component 13 or 23 may be supplied to a portion of a plurality of energy consumption components. As an example, the stored electricity may be supplied to an electric product such as a refrigerator required in continuous operation among a plurality of electric products. Alternatively, the stored electricity may be supplied to an energy consumption component with relatively low power among a plurality of energy consumption components that constitute one electric product. It will be apparent that the stored electricity is supplied to an energy consumption component with high power. Alternatively, when a course using a relatively small amount of power is performed among a plurality of courses in which an electric product is performed, the stored electricity may be supplied. It will be apparent that the stored electricity may be supplied even when a course using a large amount of power is performed.

Meanwhile, in a case where electricity is generated and stored by a fan or motor as described above, the electricity stored in the energy storage component 13 or 23 may be supplied to an energy consumption unit with relatively low power. As an example, the electricity stored in the energy storage component 13 or 23 may be supplied to an LED lamp, a display, a control unit, a communication unit, a low-power heater, or the like. Alternatively, in a case where the energy consumption component performs a plurality of courses, the electricity stored in the energy storage component 13 or 23 may be supplied to the energy consumption component in a course that requires low power.

The energy storage component 23 may be built in connected to one energy consumption component. Alternatively, a plurality of energy storage components 23 may be built in or connected to a plurality of energy consumption components, respectively. Alternatively, a plurality of energy storage components 23 may be built in or connected to one energy consumption component. The plurality of energy storage components 23 may be connected to one another to share the stored electricity.

Among the information related to energy, the on-peak information, the curtailment information and information on the deficiency of the amount of electricity supplied may be recognized as high-cost information considered that energy cost is relatively expensive. In this instance, the section in which the high-cost information is recognized by the specific component may referred to as a low-cost section.

On the other hand, among the information related to energy, the off-peak information, the energy increment information and the information on the excess of the amount of electricity supplied may be recognized as low-cost information considered that energy cost is relatively cheap. In this instance, the section in which the low-cost information is recognized by the specific component may be referred to as a low-cost section.

The information related to the fluctuation of the energy cost (high-cost or low-cost information) may be recognized as information for determining a power saving driving scheme of the specific component (e.g., the energy consumption component). That is, the information related to the fluctuation of the energy cost may be recognized by dividing a time slot (time period) based on energy cost or pricing period (pricing zone) for determining a driving scheme of the specific component into at least two or more.

A high period means a high price time period (period of high cost) or a high pricing period and a low period means a low price time period (period of low cost) and a low pricing period.

As an example, in a case where the information related to energy is recognized as a Boolean signal, the time slot (time period) based on energy cost or pricing period (pricing zone) for determining a driving scheme of the specific component may be divided into two. In a case where the information related to energy is divided into a plurality of levels or recognized as real-time information, the time period or pricing period may be divided into three or more.

Meanwhile, the information related to energy cost corresponding to at least time may be recognized as information for determining a power saving driving scheme of the specific component. That is, the information related to energy cost may be recognized by dividing a time slot (time period) or pricing zone (time period) into at least two or more. As described above, the divided time period or pricing period may be determined based on the kinds of the recognized information (the Bloolean signal, the plurality of levels and the real-time information).

In other words, the information related to fluctuation of energy cost may be recognized by dividing a determination factor for driving the specific component into two or more, and functions on time and energy cost may be included in the determination factor.

In a case where the information related to energy cost is divided into two levels or more, the driving scheme of the specific component may be determined according to the information divided into levels.

On the other hand, in a case where the recognized information related to energy cost is not divided based on a specific reference (e.g., real-time cost information), it is compared with predetermined information, and the driving scheme of the specific component may be determined based on the compared result.

Here, the predetermined information may be reference information (e.g. reference value) for dividing the information related to energy cost, and the compared result may be whether not the information related to energy cost is more or less than the reference value.

Specifically, each of the kinds of information related to energy may be divided into first information 41 that is raw information, second information 42 that is refined information, and third information 43 that is information for performing the function of the specific component. That is, the first information is a raw data, the second information is a refined data, and the third information is a command for performing the function of the specific component.

The information related to energy is included a signal, and the signal is transmitted. In this instance, one or more of the first to third information may be transmitted several times while the content of the information is not converted but only the signal including the information is converted.

For example, as shown in Fig. 3, a component that receives a signal including the first information may convert only the signal and transmit a new signal including the first information to another component.

Therefore, it is described in this embodiment that the conversion of signal is a different concept from the conversion of information. In this instance, it can be readily understood that when the first information is converted into the second information, the signal including the first information is also converted into the signal including the second information.

However, the third information may be transmitted several times in the state that the content of the third information is converted or in the state that only the signal including the third information is converted while the content of the third information is identically maintained.

Specifically, in a case where the first information is raw information on time-based pricing, the second information may be refined information on the time-based pricing. The refined information on the time-based pricing is information in which the time-based pricing is divided into a plurality of levels or analysis information. The third information is a command generated based on the second information.

The specific component may generate, transmit or receive one or more of the first to third information. The first to third information are not necessarily transmitted or received in sequence. Only a plurality of pieces of third information without the first and second information may be transmitted in sequence or parallel. Alternatively, the first and third information may be transmitted or received together, the second and third information may be transmitted or received together, or the first and second information may be transmitted or received together.

As an example, in a case where the specific component receives the first information, it may transmit the second information or may transmit the second and third information.

In a case where the specific information receives only the third information, it may generate and transmit new third information.

Meanwhile, in the relation between two pieces of information, one is a message and the other is a response for the message. Thus, each of the components that constitute the network system may transmit or receive a message. In a case where each of the components receives a message, it may respond to the message. Therefore, in the case of an individual component, the transmission of a message is a relative concept with the response for the message.

The message may include a data (first or second information) and/or a command (third information).

The command (third information) may include a command for storing the data, a command for generating the data, a command for processing the data (including the generation of an additional data), a command for generating an additional command, a command for transmitting the additionally generated command, a command for transmitting a received command, and the like.

In this specification, the response for the received message means storage of the data, processing of the data (including generation of an additional data), generation of a new command, transmission of the newly generated command, simple transmission of a received command (including generation of a command for transmitting the received command to another component), operation, transmission of the stored information, transmission of an acknowledge message (acknowledge character or negative acknowledge character), or the like.

For example, in a case where the message is first information, the specific component that receives the first information may generate second information by processing the first information, or may generate the second information and new third information, as a response for the message.

The specific component that receives the message may provide a response related to energy. Here, the term "response" may be understood as a concept including an operation through which the specific component can perform a function. As an example, the HAN 20 may perform an operation related to energy by receiving a message.

The response (operation) related to energy, provided by the specific component, will be described in detail. For example, the specific component may be an energy consumption component.

The energy consumption component may be driven so that the energy cost when it is driven based on the recognition for energy information is reduced as compared with that when it is driven without the recognition for energy information.

The specific component may include a plurality of modes in which it is driven to perform its own function. The plurality of modes are a first mode and a second mode in which energy cost is relatively saved as compared with that in the first mode. The specific component may be driven in at least one of the first and second modes.

Here, the first mode may be a general mode and the second mode may be a power saving mode. Alternatively, the first and second modes may all be power saving modes.

The general mode may be understood as a mode in which the function of the specific component is performed without recognition of energy information. On the other hand, the power saving mode may be understood as a mode in which the function of the specific component is performed based on the recognition of energy information so as to save energy cost.

In a case where the first and second modes are power saving modes, the first mode may be specified as a driving scheme for saving energy cost and the second mode may be specified as a driving scheme in which the energy cost in the second mode is more saved than that in the first mode.

Meanwhile, in a case where the specific component (e.g., the energy consumption component) is driven, at least a portion is recognized in a driving scheme including at least drive time and course. In this case, an unrecognized portion may be generated so as to save energy cost, and a recognized portion may be converted into another scheme.

For example, at least a portion of the driving scheme may be recognized under the control of the energy management component, the control of the energy consumption component, or the like. In a case where a specific driving scheme is further required so as to save energy cost, an unrecognized portion of the driving scheme may be newly generated, and a recognized portion may be converted into another scheme so as to save energy.

It will be apparent that the process of generating the unrecognized portion may be omitted. In this case, the process of converting the recognized portion into another scheme. On the other hand, the process of converting the recognized portion into another scheme may be omitted. In this case, the process of newly generating the unrecognized portion may be performed.

The drive time may include a drive start time or drive end time. The course may include a drive period of the specific component and the power of the specific component.

The generated scheme or converted scheme may be a scheme recommended by the specific component so as to save energy cost. Here, the specific component may be an energy consumption component (control component) or the energy management component.

As an example, in a case where the recognized scheme is a specific drive time, the specific drive time may be converted into another time so as to save energy cost, and a specific course may be generated.

On the other hand, in a case where the recognized scheme is a specific course, the specific course may be converted into another course so as to save energy cost, and a specific time may be generated.

Under the control described above, a change in time or power may be made with respect to the output function of the specific component based on time.

The generated scheme or converted scheme may be performed within a set range. That is, in the process of recognizing at least a portion of the driving scheme, the generation or conversion of the driving scheme may be performed within a predetermined reference in which the recognized portion appears (e.g., restriction set by a user, constraint set under the control of the energy management component or energy consumption component, or the like).

Therefore, in a case where the set range is out of the predetermined reference, it is restricted to generate the unrecognized portion or to convert the recognized portion into another scheme.

Another embodiment is proposed.

Cost information may further included in the recognized driving scheme. That is, in a case where the cost information is recognized, a portion related to the drive time or course may be generated. The generated driving scheme may be recommended.

Meanwhile, a response of the specific component based on the information related to the fluctuation of the energy cost (high-cost or low-cost information), e.g., a power control for power saving driving, may be performed. An output decrease (including an output of zero) or output increase may be included in the output control.

It is as described above that the output is decreased or zero, maintained or increased based on the recognition for the information (on-peak or off-peak) related to energy cost.

If high-cost information is recognized, the output may be zero or decreased. Specifically, the output in the recognition of the high-cost information may be decreased as compared with that in the recognition of low-cost information. As described above, the decrease of the output may be previously determined before the specific component is operated, or may be changed when the high-cost information is recognized posterior to the start of the operation of the specific component.

In a case where the output of the specific component is zero or decreased, the function to be performed by the specific component may be lost as compared with a normal case. Therefore, a response for restoring the lost function may be performed.

As an example, after the output of the specific component is decreased, the specific component may be controlled so that the total operation time of the specific component is increased or so that the output is increased in at least a time period.

In other words, if specific reference information related to energy information is recognized in a period after the output of the specific component is controlled, the response for controlling the output may be released. Here, the term "period" may be divided based on a point of time when the high-cost information is recognized.

The total operation time may be understood as a time approaching a specific target in the process of performing the function of the specific component. As an example, in a case where the specific component is an electric appliance (washing machine, drying machine, cooking appliance or the like) intermittently driven (or driven in a specific course), the total operation time may be understood as a time until a corresponding course is completed.

On the other hand, in a case where the specific component is an electric appliance (refrigerator, water purifier, or the like) driven at normal times, the total operation time may be understood as a time approaching a target set for performing the function of the specific component. For example, the set target may be a target temperature, a target amount of ice produced, or a target amount of clean water in the refrigerator.

The total operation time may be increased as compared with the operation time set before the output of the specific component is decreased. In a case where the output of the specific component is not decreased, the total operation time may be increased as compared with the operation time of the specific component. However, although the total operation time of the specific component is increased, the specific component is controlled so that the total energy cost generated through the drive of the specific component can be saved as compared with that when the output of the specific component is not decreased.

If the high-cost information is recognized, the output of the specific component may be increased.

However, although the output is increased at a point of time when the high-cost information is recognized, the total output of the specific component during the entire driving period may be decreased or maintained as compared with that when the specific component is operated under a normal output. Alternatively, although the output is increased at a point of time when the high-cost information is recognized, the total power consumption or total time-based pricing of the specific component during the entire driving period may be decreased as compared with that when the specific component is operated under the normal output.

If the low-cost information is recognized, the output of the specific component may be increased. For example, in a case where the operation reservation of the specific component is set up, the driving of the specific component may be started before the setup time, or a component having a large output in a plurality of components may be first driven. In a case where the specific component is a refrigerator, supercooling may be performed by increasing an output as compared with the existing output. In a case where the specific component is a washing machine or a washer, hot water may be stored by driving a heater earlier than the time when the heater is to be operated. Alternatively, in a case where the specific component recognizes an off-peak signal (e.g., at a point of time of recognition), electricity may be stored.

Meanwhile, in a case of a specific condition (additional condition) is generated based on the information related to the fluctuation of the energy cost (high-cost or low-cost information), the response of the specific component, e.g., the output control for power saving driving, may be limited. That is, the output of the specific component may be maintained.

Here, the term "limitation" may be understood as the release of the output control performed or not performed.

The specific condition includes a case where influence on energy cost is minute even though the output control of the specific component is not performed or a case where it is necessary to prevent a function to be performed by the specific component from being degraded when the output of the specific component is controlled.

Whether or not the influence on the energy cost is minute may be determined based on a predetermined reference (time-based pricing, power consumption or information on operation time). The predetermined reference may be a relative or absolute value.

The case where the function to be performed by the specific component is degraded may be considered as a case where the specific component is a defrosting heater, for example.

In a case where it is controlled to decrease the output in a high-cost time period and to increase the output in the low-cost time period, the driving of the defrosting heater is more frequently performed than that during a normal time (setup period). In this case, the temperature of a storage room in the refrigerator is increased, and thus, the control of the output can be limited.

Meanwhile, the specific component 30 may include a display unit 31 for displaying information. In this embodiment, the term "information display" means that visual, auditory, olfactory, and tactile information is known to the outside. Also, the display unit 31 may include a touch screen for selecting or inputting information. Alternatively, the specific component 30 may include a separate input unit for inputting information by cable or radio.

All the information (energy information or additional information except the energy information) described above may be displayed on the display unit 31. One of the energy information and additional information may be displayed, or two or more pieces of information may be simultaneously displayed. That is, two or more pieces of information may be simultaneously displayed on the display unit 31. As an example, in a case where two or more pieces of information are simultaneously displayed, any one of the information is selected. Then, the selected screen may be enlarged, and the unselected screen may be reduced. For another example, if any one of the two or more pieces of information is selected, the selected screen may be enlarged, and the unselected screen may be disappear. In a case where specific information is selected and the selected screen is enlarged, information more specific than the previous information or information different from the previous information may be displayed on the enlarged screen. For example, in a case where the selected information is character, graphic information may be displayed on the enlarged screen. Alternatively, two or more pieces of information may be sequentially displayed on the enlarged screen. In a case where two or more pieces of information are displayed on the display unit 31, two or more relative positions may be varied.

Information except energy cost information and energy cost may be displayed on the displayed unit 31. The energy cost information may include current cost, past cost, or estimated cost in the future. The energy cost information may include not only information on cost information in a specific period or time but also information on cost used with respect to the operation of a component, cost used in the present, cost to be used (estimation cost), or the like.

The information except the energy cost information may include information on energy reduction, emergency situation, grid safety, power generation quantity, operation priority, energy consumption, energy supply amount, information (e.g., cost change rate, average cost, level or the like) newly generated based on two or more pieces of information (one or more pieces of energy cost information and/or information except the one or more pieces of energy cost information), and the like. Here, the energy consumption may be energy consumption used two or more home networks, and may be simultaneously or selectively displayed.

The information on energy consumption may include information on past consumption, current consumption and estimated consumption in the future. The information on energy consumption may include information on accumulated consumption for a specific period (time), average consumption, increasing rate of consumption, decreasing rate of consumption, maximum consumption, minimum consumption, and the like.

The additional information may include one or more of environment information, time information, information related to the one or more components, information related to another component, and information related to a user using the one or more components. The environment information may include one or more of information related to carbon dioxide emission rate, concentration of carbon dioxide in air, temperature, humidity, precipitation, presence of rainfall, amount of solar radiation, amount of wind. The time information may include one or more of current time information, time information related to energy, and information related to an operation of the one or more components.

In addition to the information described above, information refined based on at least one information or newly generated information may also be displayed on the display unit 31.

In a case where the specific component 30 is the energy storage component 13 or 23, the presence of use of the stored electricity, the remaining amount of the store electricity and the like may be displayed. If the remaining amount of the stored electricity is less than a predetermined value, alarm information may be displayed.

The information displayed on the display unit 31 may include one or more of information on number, character, sentence, figure, shape, symbol, image and light. The information displayed on the display unit 31 may include one or more of information on graph for each time or period, level, table. One or more of the shape, color, brightness, size, position, alarm period, alarm time of the information displayed on the display unit 31 may be varied.

A currently operable function (or menu) may be displayed on the display unit 31. Alternatively, among a plurality of functions, operable and inoperable function may be divided by size, color, position and the like, and then displayed on the display unit 31. Alternatively, in a case where separate input units are provided, only an input unit for selecting an operable function may be activated, or an input unit for selecting an operable function and an input unit for selecting an inoperable function may be displayed in different colors. The target or display method of information displayed on the display unit 31 may be set and changed by a user, or may be changed automatically.

In a case where a condition for informing the user of information is satisfied, specific information may be displayed on the display unit 31. It will be apparent that a portion of a plurality of pieces of information may be continuously displayed in the state that a component is turned on. The display time of the information may be changed or set automatically or manually.

If specific information (one or more pieces of information) is selected using the input unit, the selected information may be displayed. If a user contacts a portion of a component, e.g., an input unit, a handle, a display or the like, regardless of information display selection, or operates one or more buttons or knobs that constitute the input unit, a portion of the information may be displayed. In this instance, the information to be displayed may be set or changed. It will be apparent that a sensing unit for sensing a user's contact may be provided to the component. Alternatively, the specific information may be displayed by installation environment or variation of outdoor environment. Alternatively, the specific information may be displayed when the specific component receives new information. Alternatively, the specific information may be displayed when the kind or state of the specific component is changed. As an example, if a light emitting unit is turned off in an off-peak section and an on-peak section comes, the light emitting unit may be turned on. Alternatively, the specific information may be automatically displayed when the operation or state of the component is changed. As an example, in a case where the mode of the component is changed, information related to the changed mode may be automatically displayed.

Meanwhile, the display unit 31 may be separably connected or fixed to the component 30. In a case where the display unit 31 is separable from the component 30, it may perform wired or wireless communication with the component 30 (or control unit of the component). In a case where the display unit 31 is fixed to the component 30, it may also perform wired or wireless communication with the component 30.

In a case where the display unit 31 is separable from the component 30, a communication unit and an input unit for inputting or selecting information may be provided to the display unit 31. Thus, information can be inputted or selected through the input unit in the state that the display unit 31 is separated from the component 30. The communication unit may be provided to the component 30, and only the display unit 31 may be separated from the component 30. The display unit 31 may be the energy management component 24, the energy metering component 25 or the central management component 27, or may be a separate control apparatus.

In a case where the display unit 31 is provided with a communication unit, a communication unit may also provided to the component 30. In a case where the display unit 31 and the component 30 are in the state that they are communicated with each other and information is transmitted/receive through a communication signal, the display unit 31 may be used. That is, in a case where the intensity of a signal is secured so that information can be included in the communication signal, the display unit 31 may be in an available state. On the other hand, in a case where the display unit 31 is not communicated with the component 30 or information is not included in the communication signal due to the weak intensity of the signal, the display unit may be in an unavailable state. One of the display unit 31 and the component 30 transmits a communication signal, and the other of the display unit 31 and the component 30 transmits a response signal. The presence of use of the display unit 31 may be determined by the presence of reception of the communication and response signals and the signal intensity. That is, in a case where any one of the display unit 31 and the component 30 does not receive a signal or the intensity of received signal is less than reference intensity, it may be determined that the display unit 31 is unavailable. Any one of the display unit 31 and the component 30 may increase the intensity of a transmission signal until it receives a response signal of which intensity is more than the reference intensity.

Information for informing the user of the presence of use of the display unit 31 may be displayed on the display unit 31 or the component 30. If it is recognized that the display unit 31 is unavailable, the component 30 may be controlled to increase its unique performance, to perform a door locking function or to limit its operation. Alternatively, the power of the component may be off while maintaining the power of a communication apparatus (modem) required for performing communication in the network system. Alternatively, the power of the component may be turned off while maintaining only a memory function for storing the state information of the component.

Meanwhile, sensors may be provided to the respective display unit 31 and component 30 so as to sense the presence of mounting of the display unit 31. As an example, the presence of mounting of the display unit 31 may be determined when the component 30 is operated. Each of the sensors may be a vibration sensor for sensing vibration. If the display unit 31 is mounted on the component 30, vibration generated in the operation of the component 30 can be transferred to the display unit 31. Therefore, in a case where the difference between the values of vibrations respectively sensed by the sensors is less than a predetermined value, it may be recognized that the display unit 31 is mounted on the component 30. If it is recognized that the display unit 31 is mounted on the component 30, the operation of the component 30 may be controlled so that vibration or noise generated in the operation of the component 30 is decreased.

As an example, in a case where the component 30 is a washing machine or drier, the rotation speed of a motor may be decreased. In a case where the component 30 is a refrigerator, the driving period of a compressor may be decreased. On the contrary, if it is recognized that the display unit 31 is separated from the component 30, the component may be controlled to increase its unique performance, to perform a door locking function or to limit its operation.

As another example, each of the sensors may be a temperature sensor. In a case where the difference between the values of temperatures respectively sensed by the sensors is less than a predetermined value, it may be recognized that the display unit 31 is mounted on the component 30.

In the state that the display unit 31 is separated from the component 30, an auxiliary display unit may be provided to the component 30 so as to enable the operation of the component 30. The presence of operation of the auxiliary display unit may be determined based on the presence of use of the display unit 31. As an example, if the display unit 31 is separated from the component 30 or is unavailable, the auxiliary display unit may be turned on.

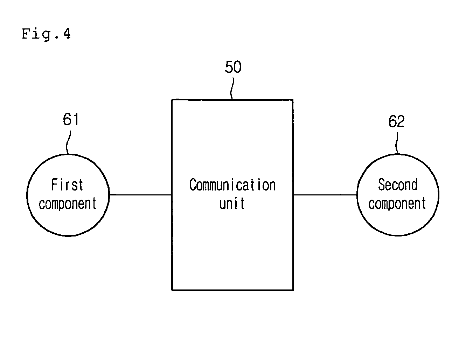

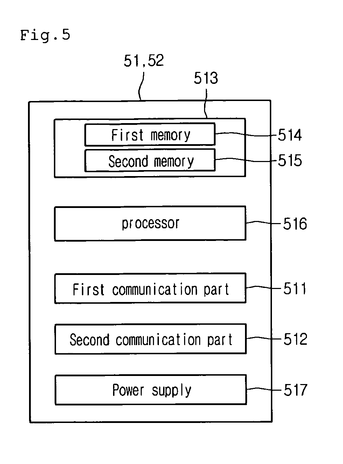

Fig. 4 is a view showing the communication structure of two components that constitute the network system according to a first embodiment. Fig. 5 is a block diagram showing the detailed configuration of a communication device that constitutes a communication unit.

Referring to Figs. 2, 4 and 5, first and second component 61 and 62 that constitute the network system may perform wired or wireless communication by means of a communication unit 50. The first and second components 61 and 62 may perform unidirectional or bidirectional communication.

In a case where the two components 61 and 62 perform wired communication, the communication unit 50 may be a simple communication line or power line communication means. It will be apparent that the power line communication means may include communicators (e.g., a modem or the like) respectively connected to the two components.

In a case where the two components 61 and 62 perform wireless communication, the communication unit 50 may include a first communicator 51 connected to the first component 61 and a second communicator 52 connected to the second component 62. In this case, the first and second communicators 51 and 52 perform wireless communication with each other.

As an example, if any one of the first and second comunicators is powered on, one of the two communicators may transmit a network participation request signal, and the other of the two communicators may transmit a permission signal. As another example, if any one of the first and second comunicators is powered on, the powered-on communicator may transmit a network participation request signal to a communicator previously participated in the network, and the communicator that receives the request signal may transmit a permission signal to the powered-on communicator.

In a case where a communicator that recognizes energy information determines that an error occurs in the received information in the state that a specific component participates in the network, the information is re-requested. For example, in a case where the first communicator receives energy information from the second communicator but an error occurs in the received information, the first communicator may request the second communicator to re-transmit the energy information. If the first communicator does not receive normal information for a predetermined time or number of times, it is determined that the first communicator has an error. In this case, information for informing a user of the error may be displayed in the first communicator or the first component 61.

The first component 61 may be a component that constitutes the UAN 10 or a component that constitutes the HAN 20.

The second component 62 may be a component that constitutes the UAN 10 or a component that constitutes the HAN 20.

The first and second components 61 and 62 may be the same kind of component or different kinds of components.

Components may be joined in the UAN 10 or the HAN 20.

Specifically, addresses may be assigned to a plurality of components, e.g., first and second components, respectively. Here, the addresses are necessary for performing communication between the components and can be mapped to at least a group.

The address may be understood as values respectively converted from the unique code of the first or second component. That is, at least a portion of the components that constitute the network system may have an unchangeable/unique code, and the code may be converted into an address for building a network.

In other words, product codes for at least some of the plurality of components capable of constituting first and second networks may be converted into different network codes based on the constituted networks.

As an example, the product code may be a unique code determined in production of electric appliances or a code separately provided for the registration of a network. The product code may be converted into an identity (ID) for identifying a network to which the electric appliance is to be registered.

The first and second networks may be networks that constitute the UAN 10 or networks that constitute the HAN 20. On the other hand, the first and second networks may be the UAN 10 and the HAN 20, respectively. Alternatively, the first and second networks may be the HAN 20 and the UAN 10, respectively.

A first component and a second component for allowing the first component to participate in the network may be included in the plurality of components that constitute the network. For example, the first component may be an electric appliance and the second component may be a server.

Any one of the first and second components transmits a request signal for participating in the network, and the other of the first and second components may transmit a permission signal.

That is, a signal may be transmitted/received between the first and second components, and whether or not to participate in the network may be determined based on the transmission time or number of the signal.

As an example, the first component transmits a test signal to the second component, and it is determined whether or not a response signal from the second component is transmitted to the first component. In a case where the response signal is not transmitted, the first component re-transmits the test signal, and it is re-determined whether or not a response signal from the second component is transmitted to the first component. By repeating such a process, if the transmission number of the test signal exceeds the setting number of the test signal, it may be determined that the second component does not participate in the network.

Meanwhile, the first component may transmit the test signal to the second component. If a response signal from the second component is not transmitted within a setup time, it may be determined that the second component does not participate in the network.

The first and second communicators 51 and 52 may have the same structure. Hereinafter, the first and second communicators 51 and 52 will be referred to as a communicator 51 and 52.

The communicator 51 and 52 may include a first communication part 511 for communication with the first component 61, a second communication part 512 for communication with the second component 62, a memory 513 for storing information received from the first component 61 and information received from the second component 62, a processor 516 for performing information processing, and a power supply 517 for supplying power to the communicator 51 and 52.

Specifically, the communication language (or scheme) of the first communication part 511 may be identical to or different from that of the second communication part 512.

Two kinds of information respectively received from the two components may be stored in the memory 513. The two kinds of information may be stored in a single sector or may be respectively stored in sectors. In any case, an area in which the information received from the first component 61 may be referred to as a first memory 514, and an area in which the information received from the second component 62 may be referred to as a second memory 515.

The processor 516 may generate first information or generate second and third information based on information received from the component or another communicator.

As an example, in a case where the communicator 51 and 52 receives the first information, it may generate information or sequentially generate the information and the second information by processing a data. Alternatively, in a case where the communicator 51 and 52 receives the first information, it may generate the second and third information by processing a data. In a case where the communicator 51 and 52 receives the third information, it may new third information.

For example, in a case where the second component is an energy consumption component (electric home appliance, component that constitutes the electric home appliance, or the like), the second communicator may generate a command for reducing energy consumption. In a case where the second component is an energy generation component, energy distribution component or energy storage component, the second communicator 52 may generate a command for energy generation time, generation amount, energy distribution time, distribution amount, energy storage time, storage amount or the like. In this case, the second communicator 52 serves as an energy management component.

The power supply 517 may receive electricity supplied from the components 61 and 62 or may receive electricity supplied from a separate power source. Alternatively, the power supply 517 may be a battery or the like.

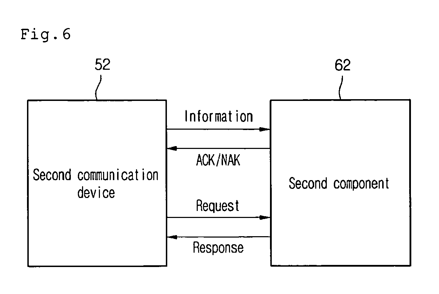

Fig. 6 is a view showing a communication performing process between a specific component and a communication device according to the first embodiment.

Hereinafter, for convenience of illustration, a communication performing process between the second component 62 and the second communicator 52 will be described as an example. A communication performing process between the first component 61 and the first communicator 51 may be identically applied to that between the second component 62 and the second communicator 62.

Referring to Figs. 5 and 6, the second communicator 52 receives a message from the first communicator 51. The second communicator 52 may receive a message in real time or by periods without transmitting a request for the message to the first communicator 51, or may receive a message as a response for the request for the message to the first communicator 51. Alternatively, the second communicator 52 may receive a message by requesting information to the first communicator 51 at a point of time when it is initially turned on. Then, the second communicator 52 may receive information in real time or by periods from the first communicator 51 without a request for information.

The information received from the first communicator 51 is stored in the memory 513. The second communicator 52 transmits a message to the second component 62 as a response for the message. In this instance, the message transmitted to the second component 62 relates to new information different from the information previously stored in the memory 513, or information generated in the processor 516.

Then, the second component 62 transmits an acknowledge character (ack) or negative acknowledge character (Nak) to the second communicator 52 as a response for the message. The second component 62 performs a function (generation of a command, operation, or the like) based on the received information, or waits for performing the function.

Meanwhile, the second communicator 52 requests component information to the second component 62 in real time or by periods. As an example, the component information may be component state information or information on a component unique code, a manufacturer, a service name code, an electricity use amount, and the like. Then, the second component 62 transmits component information to the second communicator 52 as a response for the request. The component information is stored in the memory 513 of the second communicator 52.

If the second communicator 52 receives a message for requesting the component information from the first communicator 51, it transmits the component information stored in the memory 513 to the first communicator 51 as a response for the message. Alternatively, the second communicator 52 transmits the component information stored in the memory 513 to the first communicator 51 in real time or by periods.

The second communicator 52 may transmit the information of the first component, stored in the memory, to the first component together with the information received from the first component. Alternatively, the second communicator 52 may transmit the information of the first component, stored in the memory, to the first component, separately from transmitting the information received from the first component.

The second communicator 52 stores the information of the second component 62 in the memory 513. Hence, in a case where the second communicator 52 receives a message for requesting the component information from the first communicator 51, it transmits the component information stored in the memory 513 directly to the first communicator 51 without a request for information to the second component 62, and thus, the communication load of the second component 62 can be reduced. That is, the second component becomes a virtual component.

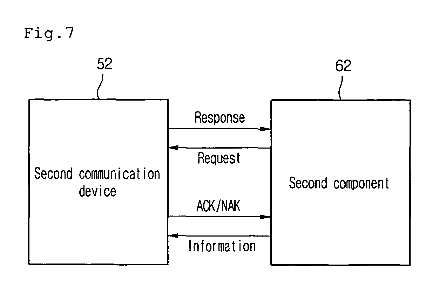

Fig. 7 is a view showing a communication performing process between a specific component and a communication device according to a second embodiment.

Hereinafter, for convenience of illustration, a communication performing process between the second component 62 and the second communicator 52 will be described as an example. A communication performing process between the first component 61 and the first communicator 51 may be identically applied to that between the second component 62 and the second communicator 62.

Referring to Figs. 5 and 7, the second communicator 52 receives a message from the first communicator 51. The second communicator 52 may receive a message in real time or by periods without transmitting a request for the message to the first communicator 51, or may receive a message as a response for the request for the message to the first communicator 51. Alternatively, the second communicator 52 may receive a message by requesting information to the first communicator 51 at a point of time when it is initially turned on. Then, the second communicator 52 may receive information in real time or by periods from the first communicator 51 without a request for information.

If the second communicator 52 receives a message for requesting information from the second component 62, it transmits a message to the second component 62 as a response for the message for requesting the information. In this instance, the message transmitted to the second component 62 relates to new information different from the information previously stored in the memory 513, or information generated in the processor 516. Alternatively, the information transmitted to the second component 62 may be information received from the first component.

The second component 62 performs a function based on the received information or waits for performing the function.

Meanwhile, the second component 62 transmits component information to the second component 62 in real time or by periods. As an example, the component information may be component state information or information on a component unique code, a manufacturer, a service name code, an electricity use amount, and the like.

As described above, the electric use amount may be detected by the smart meter. In a case where the electricity use amount is included in the information of the second component 62, the correction of an actual electricity use amount may be performed by comparing the information of the second component 62 with the information of the smart meter.

Then, the second communicator 52 stores the information of the second component 62 in the memory 513, and transmits an acknowledge character (ack) or negative acknowledge character (Nak) to the second component 62 as a response for the message.

If the second communicator 52 receives a message for requesting component information from the first communicator 51, it transmits the information of the second component 62, stored in the memory 513, to the first communicator 51 as a response for the message. Alternatively, the second communicator 52 the information of the second component 62, stored in the memory 513, to the first communicator 51 in real time or by periods.

The second communicator 52 stores the information of the second component 62 in the memory 513. Hence, in a case where the second communicator 52 receives the message for requesting the component information from the first communicator 51, it transmits the information stored in the memory 513 directly to the first communicator 51 without transmitting a request for information to the second component 62, and thus, the communication load of the second component 62 can be reduced. That is, the second communicator 52 becomes a virtual component.

<Applications>

In the following descriptions, the first and second components may be reversed to each other, and therefore, overlapping descriptions will be omitted. For example, in a case where the first component is an electric home appliance and the second component is an energy management component, description in a case where the first component is an energy management component and the second component is an electric home appliance will be omitted.

Information transmitted/received by each of the components may be all the information described above. Particularly, specific information may be transmitted/received for each of the components.

The energy generation components 11 and 21 may transmit/receive information related to energy generation amount, and the like. The energy distribution components 12 and 22 may transmit/receive information related to energy distribution amount, distribution time, and the like. The energy storage components 13 and 23 may transmit/receive information related to energy storage amount, storage time, and the like. The energy metering components 15 and 25 may transmit/receive information related to energy consumption amount, and the like. The energy management components 14 and 24 may transmit/receive information related to energy generation, distribution, storage, consumption, cost, reliability, emergency situation, and the like.

(1) Case where second component is one component of HAN

The second component 62 may be an energy consumption component 26, e.g., a heater, motor, compressor, display or the like. In this case, the first component 61 may be a MICOM or energy consumption component 26 as an example. The MICOM or energy consumption component 26 may transmit a message for reducing energy consumption to another energy consumption component 26. Then, the another energy consumption component 26 may perform an operation for reducing energy, for example.

As another example, the energy consumption component 26 may be an electric home appliance. In this case, the first component 61 may be an energy storage component 23, an energy consumption component 26 (electric home appliance), an energy management component 24, an energy metering component 25, a central management component 27, a web server component 28, or a component that constitutes the UAN 10.

In this instance, an energy management function may be included or not included in the first component 61 except the energy management component 24.

In a case where an energy management function or solution is not included in the first component 61, it may be included in the communication unit or may be included in the MICOM of the second component 62. In this case, the energy management function is related to the consumption of energy.

As still another example, the second component 62 may be an energy generation component 21, an energy distribution component 22 or an energy storage component 23. In this case, the first component 61 may be an energy management component 24, a central management component 27, a web server component 28 or a component that constitutes the UAN 10.

A message may be transmitted to the second component 62. Here, the message may include energy generation time, generation amount or the like, energy distribution time, distribution amount or the like, and energy storage time, storage amount or the like.

In this instance, an energy management function may be included or not included in the first component 61 except the energy management component 24.

In a case where an energy management function or solution is not included in the first component 61, it may be included in the communication unit. In this case, the energy management function is related to the generation, distribution and storage of energy.

As still another example, the second component may be an energy metering component 25. In this case, the first component 61 may be a central management component 27, a web server component 28 or a component that constitutes the UAN 10.

An energy management function may be included or not included in the energy metering component. In a case where the energy management function is included in the energy metering component 25, the energy metering component 25 performs the same operation as the EMS.

In a case where an energy management function or solution is included in the energy metering component 25, it may be included in the communication unit or may be included in the second component 62.

As still another example, the second component 62 may be a central management component 27. In this case, the first component 61 may be a web server component 28 or a component that constitutes the UAN 10.

(2) Case where second component is one component of UAN

The first component 61 may be a component that constitutes the UAN 10. In this case, the first and second components 61 and 62 may be the same kind of component or different kinds of components.

An energy management function may be included in the first component 61, the second component 62 or the communication unit.

The energy management function included in a specific component or the energy management function included in the energy management component 14 may be related to generation amount, distribution amount, storage amount, energy use amount of a component that constitutes the HAN 20.

In this specification, an example capable of constituting the network system has been described. However, any component not mentioned in this specification may be a first or second component that performs communication through the communication unit. For example, an automobile may be a second component, and the energy management component 24 may be a first component.

(3) Case where one of first and second components communicates with third component

Although the communication between two components has been described in the aforementioned examples, each of the first and second components may perform communication with one or more components (a third component to an n-th component).

In this case, the relation of the first or second component that performs communication with the third component and the like may be one of the aforementioned examples.

For example, the first component may be a component that constitutes the UAN, the second component may be an energy management component 24 that communicates with the first component, and the third component may be an energy consumption component 26 that communicates with the second component. In this instance, one or more of the three components may communicate with another component.

In this specification, the first to n-th components may be components that constitute the UAN or components that constitute the HAN. Alternatively, a portion of the components may be components that constitute the UAN, or another portion of the components may be components that constitute the HAN.

Hereinafter, third and fourth embodiments will be described. A difference between these embodiments and the aforementioned embodiments will be mainly described, and descriptions and reference numerals will be quoted to elements of these embodiments identical to those of the aforementioned embodiments.

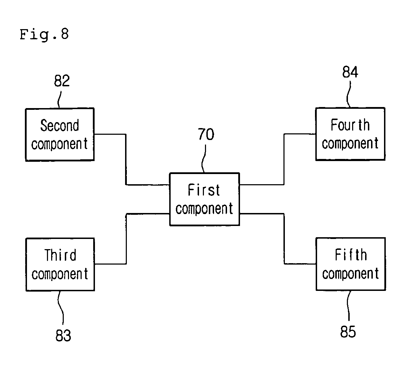

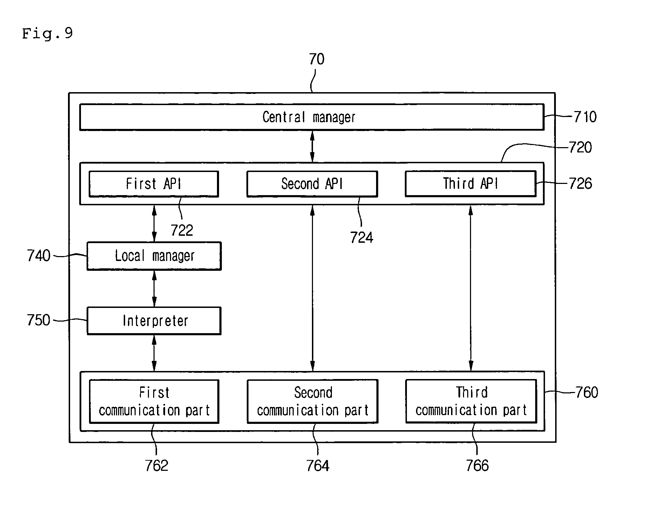

Fig. 8 is a view showing the communication structure of components that constitute the network system according to a third embodiment. Fig. 9 is a block diagram showing the detailed configuration of a first component in Fig. 8.

Referring to Figs. 8 and 9, a first component 70 may communicate with second to fifth components 82, 83, 84 and 85. Hereinafter, it will be described as an example that the first component 70 is a central management component (home server), the second and third components 82 and 83 are energy consumption components (electric home appliances), the fourth component 84 is an energy metering component (smart meter), and the fifth component 85 is a component that constitutes the UAN. The components may communicate with each other by means of a communication unit. In the network system illustrated in Fig. 8, each of the components is directly connected to the first component 70 to communicate with the first component 70. However, in a case where each of the components 82, 83, 84 and 85 is connected to new components to communicate with the new components, the network system may be extended and operated by the new components.

The second and third components 82 and 83 may be the same kind of component or different kinds of components. In this embodiment, it will be described as an example that the second and third components 82 and 83 are different kinds of energy consumption components.

The first component 70 may simply transmit information received from the fourth component 84 and/or the fifth component 85 to the second component 82 and/or the third component 83, or may process the received information and transmit the processed information.

The first component 70 may simply transmit information received from the second component 82 and/or the third component 83 to the fourth component 84 and/or the fifth component 85 (a signal may be converted), or may process the received information and transmit the processed information (the information is converted.

The first component 70 includes a communication unit 760 for performing communication with another component, a central manager 710 for managing the entire operation and/or information processing of the first component, and an application programming interface 720 (hereinafter, referred to as an API) for performing an interface between the communication unit 760 and the central manager 710 (specifically, application software).

The communication unit 760 includes a first communication part 762 for performing communication with the second and third components 82 and 83, a second communication part 764 for performing communication with the fourth component 84, and a third communication part 766 for performing communication with the fifth component 85.

In this instance, the first and second communication parts 762 and 764 may use different communication protocols from each other. As an example, the first communication part 762 may use Zigbee and the second communication part 764 may use Wi-fi. In this embodiment, the kind of communication protocol or method used by the first and second communication parts 762 and 764 is not limited. The third communication component 766 may use Internet communication as an example.

The API 720 includes a first API 722, a second API 724 and a third API 726. The third API 726 is an interface between the central manager 710 and the third communication part 766, and the first API 722 is an interface between the first communication part 762 and the central manager 710. The second API 724 is an interface between the second communication part 762 and the central manager 710.

The first component 70 further includes a local manager 740 and an interpreter 750. In a case where the information to be transmitted/received between the API 720 and the communication unit 760 is information related to operations of energy consumption components (electric home appliances), the local manager 740 outputs information corresponding to the respective energy consumption components. The interpreter 750 interprets information transmitted from the local manager 740 to the communication unit 760 or information received in the communication unit 760. The information outputted from the interpreter 750 is used to set or get values of information related to the respective energy consumption components.

The local manager 740 includes a memory (not shown) in which information related to one or more energy consumption components is stored. Alternatively, the local manager 740 may be connected to a memory in which information related to one or more energy consumption components is stored. The information related to each of the energy consumption components may include operation information of each of the energy consumption components and information for controlling the energy consumption components. The information related to each of the energy consumption components may further include software download information for operating each of the energy consumption components and information for remote controlling/monitoring.

As an example, in a case where a plurality of energy consumption components include a washing machine, a refrigerator and a cooking appliance, information related to each of the energy consumption components is stored in the memory. The information related to each of the energy consumption components may be changed as components connected to the network system are changed.

If a signal is transmitted from the API 720 to the local manager 740, information corresponding to a specific energy consumption component is outputted. In a case where a plurality of energy consumption components exist, information on the plurality of energy consumption components is outputted. The interpreter 750 interprets the information transmitted from the local manager 740 into a machine language so as to transmit the information to the energy consumption components. The machine language may be a signal used to set or get the operation information of the energy consumption components.

The information transmission process in the first component 70 will be described.

As an example, the first component 70 may receive energy information (e.g., an energy reduction signal: first command) from the forth component 45 through the second communication part 764. The received energy information is transmitted to the central manager 710 through the second API 724. In the process of information transmission between the second API 724 and the central manager 710, only a signal including the information is converted, and the content of the information is not converted.

Since the energy information is information related to the energy consumption reduction of the energy consumption components, the central manager 710 transmits information (second command) related to operations of the energy consumption components to the API 720. As an example, the central manager 710 transmits information necessary for turning off power of the washing machine or refrigerator.

Then, the information is transmitted from the first API 722 to the local manager 740.

The local manager 740 transmits information (third command) for controlling the operation of each of the energy consumption components to the interpreter 750 based on the information transmitted from the first API 722. As an example, in a case where the information transmitted from the first API 722 is information having different kinds of energy consumption components as targets, the local manager 740 transmits information related to the control of each of the energy consumption components to the interpreter 750. In this case, since the local manager 740 receives the second command and outputs the third command, the information inputted to the local manager 740 is converted and outputted by the local manager 740.

Subsequently, the interpreter 750 interprets the information transmitted from the local manager 740 into a machine language (signal). Then, the converted signal is transmitted to the target energy consumption components (second and third components) through the first communication part 762. Then, the energy consumption components (second and third components) are finally turned off so as to reduce energy.

Although it has been described above that the first component receives information through the second communication part, the first component may receive information through the third component so that the information related to the energy consumption components is outputted.

Meanwhile, the second and third components 82 and 83 may transmit their own operation information to the first component 70. Since the information transmitted from the second and third components 82 and 83 is information related to operations of the energy consumption components, the signal received in the first communication part 762 is transmitted to the central manager 710 via the interpreter 750, the local manager 760 and the first API 722. In such an information transmission process, the information related to the second and third components 82 and 83 is stored in the local manager 740. In this embodiment, since the information related to the energy consumption components is stored in the local manager, the local manager may be understood as a virtual energy consumption component (abstraction model).

The central manager 710 may transmit the received information to the second communication part 764 and/or the third communication part 766.

The operation of the first component will be described. The information received through the communication unit 760 may be transmitted directly to the API 720, or may be converted (via the interpreter and the local manager) and then transmitted to the API 720, based on the kind of information (or the type of signal).

The information transmitted from the central manager 740 may be transmitted directly to the communication unit 760, or may be converted and then transmitted to the communication unit 760.

As another example, the interpreter may be included in the local manager 740, and the information received through the communication unit 760 is transmitted to the local manager 740. However, converted information may be outputted, or information may be outputted as it is without converting the information.

Meanwhile, in a case where the information transmitted to the API 720 through the second or third communication part 764 or 766 is information (raw data or refined data) related to time-based pricing, the central manager 710 determines the presence of on-peak time. In the case of the on-peak time, the central manager 710 may transmit the information (first command) for controlling the operations of the energy consumption components to the API 720. Then, the information is converted through the local manager 740, and the converted information (second command) is transmitted to the energy consumption components through the first communication part 762. Alternatively, the central manager 710 may transmit the information related to the time-based pricing to the first communication part 762 through the second API 724 without determining the presence of on-peak time. In this case, the information may be converted or not converted. That is, in a case where the central manager directly receives first information (raw data), it may transmit the first information as it is, or convert the first information into a second information (refined data) and then transmit the second information.

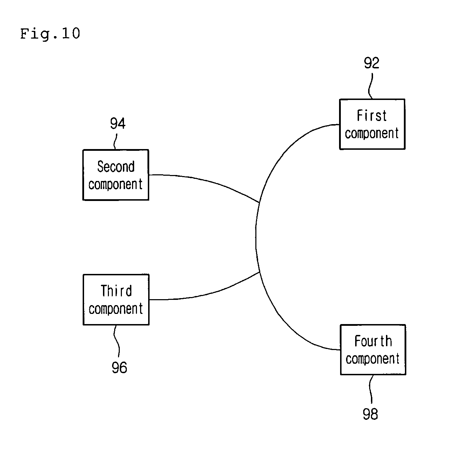

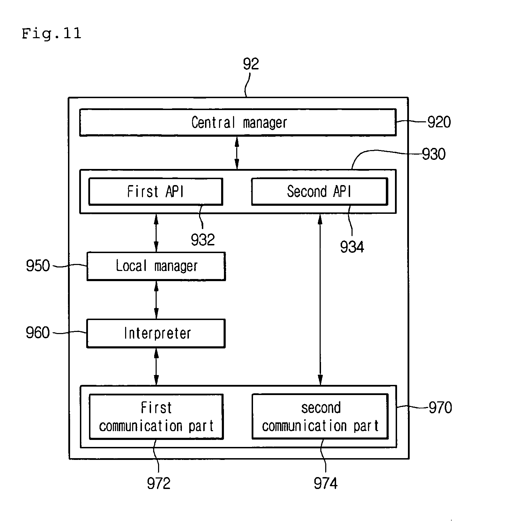

Fig. 10 is a view showing the communication structure of components that constitute the network system according to a fourth embodiment. Fig. 11 is a block diagram showing the detailed configuration of a first component in Fig. 10.

Referring to Figs. 10 and 11, the network system of this embodiment may include at least first to fourth components 92, 94, 96 and 98.

The first component 92 may communicate with the second to fourth components 94, 96 and 98. The fourth component 98 may communicate with the first to third components 92, 94 and 96.

Hereinafter, it will be described as an example that the first component 92 is a central management component (home server), the second and third components 94 and 96 are energy consumption components (electric home appliances), and the fourth component 98 is an energy metering component (smart meter).

The central management component (home server) may be understood as a component necessary for controlling at least a component that constitutes the HAN 20.

The first component 92 includes a communication unit 970 for performing communication with another component, a central manager 920 for managing the entire operation and/or information transmission/reception of the first component 92, and an application programming interface 930 (hereinafter, referred to as an "API") that serves as an interface between the communication unit 970 and the central manager 920 (specifically, application software).

The communication unit 970 may include a first communication component 972 for performing communication with the second to fourth components 94, 96 and 98, and a second communication component 974 for performing Internet communication.

The API 930 includes a first API 932 and a second API 934. The second API 934 is an interface between the central manager 920 and the second communication part 974, and the first API 930 is an interface between the first communication part 972 and the central manager 920.

The first component 92 further includes a local manager 950 and an interpreter 960. In a case where the information to be transmitted/received between the API 932 and the communication unit 970 is information related to operations of energy consumption components (electric home appliances), the local manager 950 outputs information corresponding to the respective energy consumption components. The interpreter 960 interprets information transmitted from the local manager 950 to the communication unit 970 or information received in the communication unit 970.

In this embodiment, the functions of the interpreter and the local manager are identical to those of the third embodiment, and therefore, their detailed descriptions will be omitted.

The information transmission process in the first component 92 will be described.

As an example, the first component 92 may receive energy information (e.g., energy reduction signal) from the fourth component 98 through the first communication part 972. Alternatively, the first component 92 may receive energy information from an external component connected to Internet through the second communication part 974.

The received energy information is transmitted directly to the first or second API 932 or 934 and then transmitted to the central manager 920. Since the energy information is information related to the energy consumption reduction of the energy consumption components, the central manager 920 transmits information related to the operations of the energy consumption components to the first API 932. As an example, the central manager 920 transmits information necessary for turning off power of a washing machine or refrigerator.

Then, the information is transmitted from the first API 932 to the local manager 950.

The local manager 950 transmits information for controlling the operation of each of the energy consumption components to the interpreter 960 based on the information transmitted from the first API 932. As an example, in a case where the information transmitted from the first API is information related to different kinds of energy consumption components, the local manager 950 transmits information related to the control of each of the energy consumption components to the interpreter 960.

Subsequently, the interpreter 960 interprets the information transmitted from the local manager 960 into a machine language (signal). Then, the interpreted signal is transmitted to the energy consumption components through the first communication part 972. Then, the energy consumption components are finally turned off so as to reduce energy.

Meanwhile, the second and third components 94 and 96 may transmit their own operation information to the first component 92. Since the information transmitted from the second and third components is information related to the operations of the energy consumption components, the signal received in the first communication part 972 is transmitted to the central manager 920 via the interpreter 960, the local manager 950 and the first API 932. In such an information transmission process, the information related to the first and second components is stored in the local manager 950.

The central manager 920 may transmit the received information to the first communication part 972. Then, the information of the second and third components 94 and 96 is transmitted to the fourth component 98.

The operation of the first component will be described. The information received through the communication unit 970 may be transmitted directly to the API 930, or may be converted (via the interpreter and the local manager) and then transmitted to the API 930, based on the kind of information (or the type of signal).

On the contrary, the information transmitted from the central manager 920 may be transmitted directly to the communication unit 970, or may be converted and then transmitted to the communication unit 970.

Meanwhile, in a case where the information transmitted to the API 930 through the second communication part 974 is information related to time-based pricing, the central manager 920 determines the presence of on-peak time. In the case of the on-peak time, the central manager 920 may transmit the information for controlling the operations of the energy consumption components to the API 930. Then, the information is transmitted to the energy consumption components through the local manager, the interpreter and the first communication part. In this case, the first component may be understood as an energy management component.

Although it has been described above that two energy consumption components communicate with the first component, the number of energy consumption components that communicate with the first component is not limited.

Although it has been described as an example that the first component is a home server, the first component may be an energy management component. In this case, the fourth component may be a central management component, an energy management component, a smart meter, or the like.

As another example, the first component may be a smart meter. In this case, the fourth component may be a central management component, an energy management component, or the like.

As still another example, the first component may be a terminal component (e.g., a gate way).

As still another example, each of the second and third components may be an energy generation component, an energy storage component or the like, which constitutes the HAN. That is, one or more of the energy generation component, the energy consumption component and the energy storage component may communicate with the first component. In addition to information related to the energy consumption component, information related to the energy generation component (e.g., information related to the operation of the energy generation component) and information related to the energy storage component (e.g., information related to the operation of the energy storage component) may be stored in the memory included in a local network or connected to the local network.

Although it has been described above that the first component performs Internet communication, the Internet communication may not be performed.

Although it has been described in the first embodiment that a single local manager is provided, a plurality of local managers may be provided. As an example, a first local manager may process information on an electric home appliance such as a refrigerator or washing machine, and a second local manager may process information on a display product such as a television or monitor.

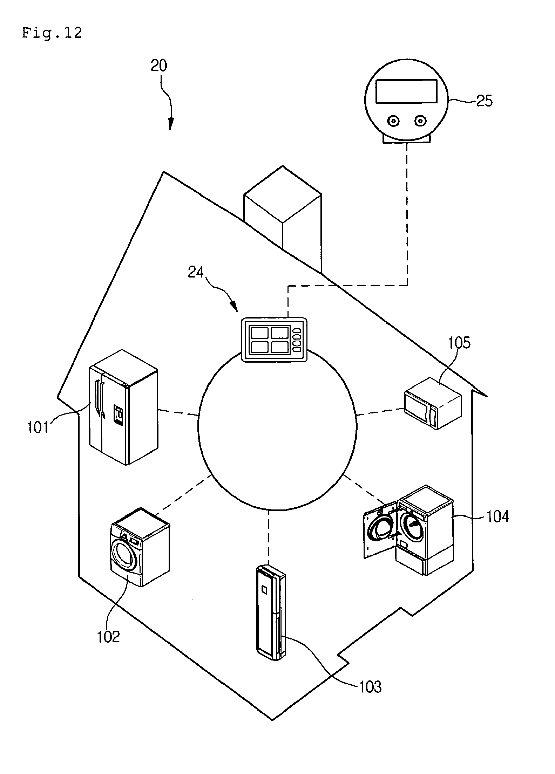

Fig. 12 is a schematic diagram illustrating a configuration of a home network according to an embodiment of the present invention.

Referring to Fig. 12, the home network 20 includes an energy measurement unit 25 for measuring power (or supplied power) used in each home and/or an electricity rate in real time and at least one energy consumption unit communicating with the energy measurement unit 25.

For example, the energy consumption unit may include at least one of a refrigerator 101, a washing machine and/or a drier 102, an air conditioner 103, a TV 104, and a cooking appliance 105.

This embodiment describes that the energy measurement unit 25 communicates with an energy consumption unit. But, unlike this, the energy consumption unit may be configured to communicate with the central management unit 27 or the energy management unit 24, and the energy measurement unit 25 may be configured to communicate with the central management unit 27 or the energy management unit 24. That is, the energy measurement unit may directly or indirectly communicate with the energy measurement unit 25.

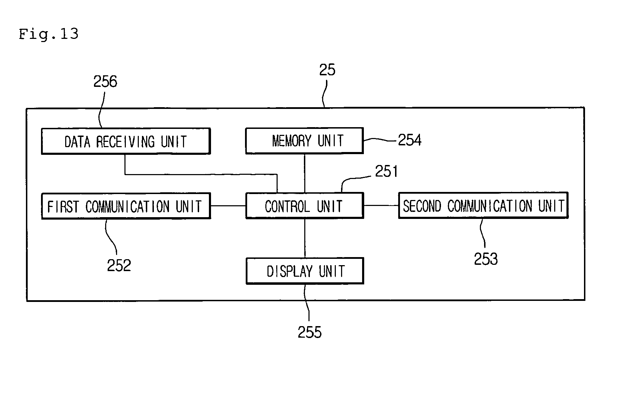

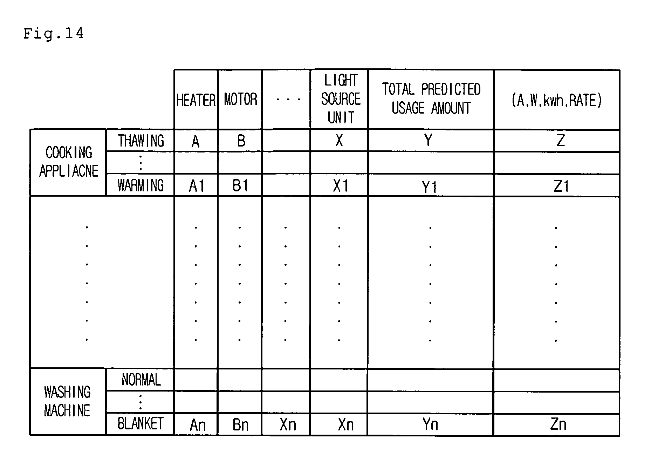

Fig. 13 is a block diagram illustrating a schematic configuration of an energy measurement unit according to an embodiment of the present invention. Fig. 14 is a schematic view illustrating an information table for a power usage prediction of an energy consumption unit stored in a memory unit of an energy measurement unit.

Referring to Figs. 13 and 14, the energy measurement unit 25 includes a control unit 251, a first communication unit 252 for communicating with at least one energy consumption unit, a second communication unit 253 for communicating with a utility network 10, a memory unit 254 for storing prediction power information according to a mode of each energy consumption, a display unit 255 for displaying various kinds of information, and a data receiving unit 256 for updating information for power usage prediction of a specific energy consumption unit from an external.

In more detail, referring to Fig. 14, the memory unit 254 stores a total prediction usage amount for each mode of each energy consumption unit and prediction usage amount information for each load. The total prediction usage amount and prediction usage amount information for each load may be stored in one of forms such as current, voltage, power, power amount, electricity rate and so on.

For example, in the case of a cooking appliance, a total prediction usage amount for thawing and a total prediction usage amount for warming may be stored. In the case of a washing machine, a total prediction usage amount for a standard course and a total prediction usage amount for a course of washing a blanket may be stored.

At this point, the memory unit 254 may store different prediction usage amount information for each driving time of a specific mode. That is, since a driving time vary according to the laundry weight in the standard course of a washing machine, its detailed information value is stored.

Also, the memory unit 254 may store different information values for each product in the case of the same type of an energy consumption unit. That is, in the case of a washing machine, since each product has a different driving characteristic, unique information on each product and total prediction usage amount information on each product are stored. Total prediction usage amount information on each product stored in the memory unit 254 may be determined by a plurality of experiments.

Also, new product information on each energy consumption unit and prediction usage amount information according thereto may be updated through a data receiving unit 256. Unlike this, as one example, new product information and a prediction usage amount information value according thereto may be periodically received and updated through the second communication unit 253.

Additionally, in general, the energy measurement unit 25 may measure a real time power usage amount of a plurality of energy consumption units constituting the home network 20. Also, each energy consumption unit may transmit its driving information and/or state information to the energy measurement unit 25. By doing so, the energy measurement unit 25 may recognize a prediction power usage amount according to driving information on each energy consumption unit, for example.

That is, the energy measurement unit 25 may predict a power usage amount of each energy consumption unit. In this case, a total power usage amount of a plurality of energy consumption units in each home may be also predicted. Also, a power amount to be used after a specific time for each energy consumption unit or a power amount to be used of entire energy consumption units may bye displayed on the display unit 255. Additionally, a current power usage amount of each energy consumption unit or a power usage amount of entire energy consumption units may be displayed on the display unit 255.

Or, a prediction power usage amount of each energy consumption unit and a current power usage amount of each energy consumption unit are transmitted from the energy measurement unit to a corresponding energy consumption unit, so that they may be displayed on a corresponding energy consumption unit. Or, a prediction power usage amount of each energy consumption unit and a current power usage amount of each energy consumption unit are transmitted from the energy measurement unit to a corresponding energy consumption unit, so that they may be displayed on a corresponding energy consumption unit.

Then, a user may confirm a prediction power usage amount and a current power usage amount, which are displayed on the display unit of the energy consumption unit of the display unit 255 of the energy measurement unit 25, so that the user may try to reduce a power usage amount.

The prediction usage amount information may be transmitted to the utility network 10. Then, an administrator, who manages the utility network 10, may recognize a prediction power usage amount to adjust generation amount, distribution amount, or storage amount, or reflect them on electricity rate information.

For example, when a prediction usage amount after 1 hr is increased, a generation amount or a distribution amount may be increased. Or, when real time rate information is transmitted to a home network, the price of an electricity rate after 1 hr may be increased and transmitted.

A power usage amount may vary according to a time elapse when a mode for each energy consumption unit is performed and although a specific energy consumption unit is not currently driven, it may be scheduled to be driven after 1 hr, so that power is efficiently managed in the case of the prediction of a power usage amount.

According to this embodiment, in addition to the real time power usage amount, a prediction power usage amount of each energy consumption unit and a power usage amount of an entire home may be predicted, so that a power supplier may efficiently manage power. Additionally, since a usage power amount of each energy consumption unit may be predicted using an information value stored in a memory unit, an additional measurement unit (for example, a current sensor) may be unnecessary in order to directly measure a power usage amount of each energy consumption unit.

In the above embodiment, although it is described that prediction information on an energy consumption unit is recognized using the information stored in a memory unit, unlike this, an energy management unit or a central management unit may be configured to recognize prediction information. Then, the energy measurement unit may receive prediction information from the energy management unit or the central management unit, and then may recognize it.

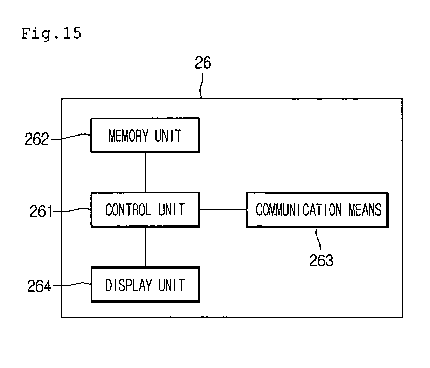

Fig. 15 is a block diagram illustrating a schematic configuration of an energy consumption unit according to a first embodiment of the present invention. In this embodiment, it is characterized that a prediction power usage amount information value of an energy consumption unit is stored in the energy consumption unit.

Referring to Fig. 15, the energy consumption unit 26 includes a control unit 261, a memory unit 262, a communication means 263, and a display unit 264. Also, the memory unit 262 stores prediction usage amount information according to a driving mode. Except information on another energy consumption unit, prediction usage amount information stored in the memory unit 262 is identical to information stored in the memory unit of the above-mentioned energy measurement unit 25. Therefore, its detailed description will be omitted.

According to this embodiment, the energy consumption unit 26 may recognize prediction power usage amount information according to a driving mode, and the recognized prediction power usage amount information may be transmitted to the energy measurement unit 25. The energy measurement unit 25 may collect information on a plurality of energy consumption units, and then may transmit it to the utility network 10.

Also, the display unit 264 may display a current power usage amount and a prediction power usage amount. Moreover, the energy consumption unit may receive a current power usage amount and prediction power usage amount of entire energy consumption units from the energy measurement unit 25. Then, the received power usage amount information on the entire energy consumption units may be displayed on the display unit 264.

When the above two embodiments are summarized, if the energy measurement unit 25 itself recognizes a prediction power usage amount or receives and recognizes prediction power usage amount information from the energy consumption unit, as a result, the energy measurement unit may recognize a prediction power usage amount of each energy consumption unit and a prediction power usage amount of entire energy consumption units.

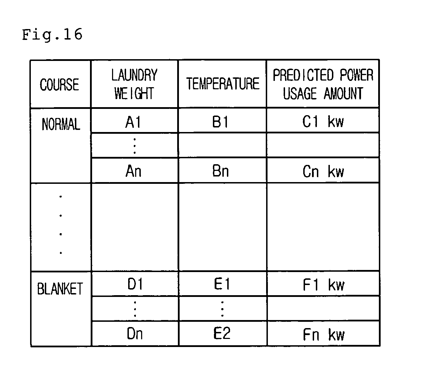

Fig. 16 is a view illustrating another example of the information stored in the memory unit of the energy consumption unit of Fig. 15. Referring to Fig. 16, a washing machine will be described as one example of an energy consumption unit.

Referring to Figs. 15 and 16, a driving course (or a mode) of the washing machine may be selected through an input unit of the washing machine. Additionally, a driving condition in the selected course may be inputted through the input unit. The course may include at lest one cycle, and the driving condition in the course means a condition in at least one cycle. The course may include a standard course, a power course, a blanket course, and a boiling course. The driving condition in the selected course may include the number of rinsing, a washing temperature, dehydrating, or the drum RPM and the number of dehydrating in a drying cycle. Also, the washing machine may include a laundry weight sensing unit for sensing an amount of the laundry and a temperature sensing unit for sensing a supply water temperature.

The memory unit of the washing machine may store a predicted power usage amount table according to a selected course, a laundry weight, and a temperature. That is, an accumulated prediction power usage amount (hereinafter, referred to as a "predicted power usage amount") when washing is completed for a specific laundry amount at a specific supply water temperature in a specific course may be stored in the memory unit. The predicted power usage amount may be determined by a plurality of experiments. In this embodiment, the laundry weight and supply water temperature are factors relating to the driving of a component (a load). In another aspect, the laundry weight and supply water temperature are factors that determines the on-time of a component. The on-time of the component means a percentage (a relative value) of the on-time in the sum of the on-time and the off-time, or an actual power on-time (an absolute value). The component may include a heater, a motor, a valve, and a display unit. Also, a power amount stored in the memory unit may vary. The variation of the stored power amount will be described later.

The display unit of the washing machine may display at least a power usage amount and an energy usage rate. Of course, the display unit may display another energy information and/or additional information besides a power usage amount and an energy usage rate.

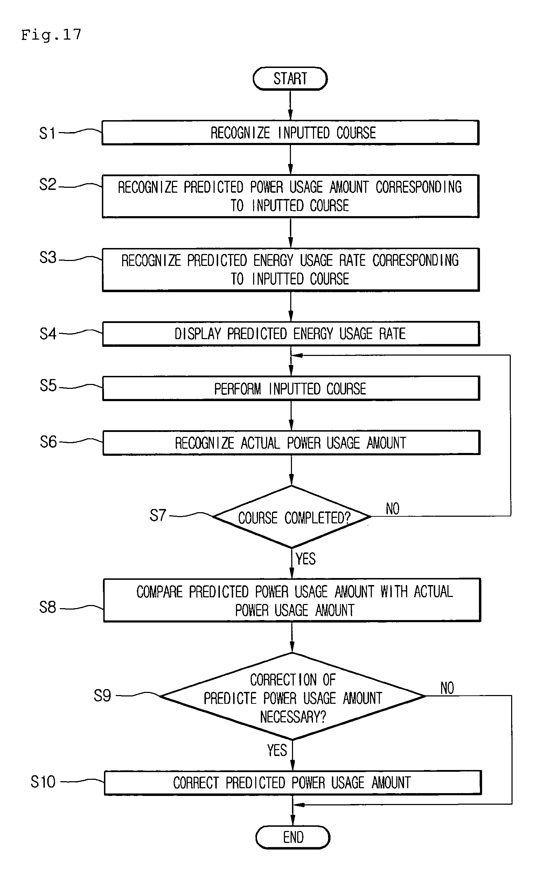

FIG. 17 is a flowchart illustrating a method of controlling an energy consumption unit according to a first embodiment of the present invention. Referring to Fig. 17, a washing machine will be described as one example of an energy consumption unit.

Referring to FIGS. 16 and 17, the control unit of the washing machine may recognize an inputted course in operation S1. The control unit may recognize course information inputted from an input unit and course information received from another component. As one example, another component may include a central management unit, an energy management unit, and an energy measurement unit.

The control unit recognizes an inputted course, and then, recognizes a predicted power usage amount corresponding to the inputted course in operation S2. In more detail, after recognizing the inputted course, the control unit may recognize the laundry weight sensed by the laundry weight sensing unit and a supply water temperature sensed by the temperature sensing unit. Then, the control unit may recognize a predicted power usage amount corresponding to the inputted course, sensed laundry weight, and temperature in operation S3.

Although this embodiment describes that the predicted power usage amount is stored in the memory unit of the washing machine, unlike this, the control unit may receive the predicted power usage amount information stored in the memory unit of another component, and then, may recognize it. In this embodiment, when the control unit receives and recognizes the predicted power usage amount information, it may be described that a washing machine including a control eventually recognizes the predicted power usage amount information.

Then, the control unit recognizes a predicted energy usage rate corresponding to the inputted course in operation S3. In more detail, the control unit may recognize a real time electricity rate or a scheduled electricity rate. Accordingly, the predicted energy usage rate may be determined by the multiplication of the recognized predicted power usage amount and a recognized electricity rate. Unlike this, the control unit may recognize a predicted energy usage rate determined by another component. When the control unit recognizes a real time rate, a predicted energy usage rate may be determined based on an electricity rate at a recognition time, or a predicted energy usage rate may be determined based on electricity rate information pre-stored in a memory unit. Then, the display unit may display a predicted energy usage rate in operation S4. Additionally, the display unit may display a predicted energy usage amount.

Also, the washing machine performs washing in the inputted course in operation S5. While the washing machine performs washing, the control unit may recognize an actually-used power amount of the washing machine in operation S6. Here, each energy consumption unit may include a power meter (a second energy measurement unit) for measuring a supplied power amount and/or a consumed power amount in real time. That is, the power meter may measure a power amount for each energy consumption unit, and the energy measurement unit 25 (a first energy measurement unit) may measure a total energy consumption amount, i.e. a total electricity consumption amount, which is consumed in the home network 20.

That is, the control unit may directly recognize the actual power usage amount information measured by the power meter or may receive the actual power usage amount information from another component and recognizes it. Also, the actual power usage amount may be stored in the memory unit. Additionally, the control unit may recognize the actual energy usage rate (determination information for the driving of a component). Accordingly, the actual energy usage rate may be determined by the multiplication of a recognized actual power usage amount and a recognized electricity rate.

Then, it is determined whether a course is completed while the washing machine performs washing in operation S7. If the course is not completed, it returns to operation S5. On the other hand, when the course is completed, the control unit compares the predicted power usage amount with the actual power usage amount in operation S8. Then, it is determined whether the correction of a predicted power usage amount is necessary in operation S9. If the correction of a predicted power usage amount is necessary based on the determination result, the predicted power usage amount stored in the memory unit is corrected in operation S10. If the correction of a predicted power usage amount is necessary, this is the case that a difference value between the predicted power usage amount and the actual power usage amount exceeds a predetermined reference. If the correction of a predicted power usage amount is necessary, the predicted power usage amount stored in the memory unit of the washing machine or the memory unit of another component is changed into the actual power usage amount.

While the washing machine is driven, the display unit may continuously or intermittently display a predicted power usage amount and/or a predicted energy usage rate, and after the course of the washing machine is completed, may display the actual power usage amount and the actual energy usage rate together. As another embodiment, while the washing machine is driven, the display unit may continuously or intermittently display a predicted power usage amount and/or a predicted energy usage rate, and after the course of the washing machine is completed, may display only the actual power usage amount and/or the actual energy usage rate. As another embodiment, while the washing machine is driven, the display unit may display the predicted power usage amount and/or the predicted energy usage rate in addition to the actual power usage amount and/or the actual energy usage rate. Additionally, the display unit may display a predicted greenhouse gas emission amount. The predicted greenhouse gas emission amount means a predicted greenhouse emission amount of a specific energy generation unit, and may be determined by the multiplication of a predicted power usage amount and a greenhouse gas index or the multiplication of an actual power usage amount and a greenhouse gas index.

Although the washing machine in the above embodiment is described as one example, the embodiment may be identically applied to an energy consumption unit where a course input is possible, or a course input and a course condition input are possible. As one example, in the case of a cooking appliance, a drier, and a dish washer, since a course input and a course condition input are possible, the contents described with reference with Fig. 17 may be applicable as it is. At this point, a cooking temperature of the cooking appliance is a factor relating to the driving of a component.

EP 2 587 728 A2

In this embodiment, the information that the control unit of the washing machine recognizes (such as an actual/predicted power usage amount, an actual/predicted energy usage rate, and so on) may be recognized by another component that may communicate with the washing machine. That is, the information that the control unit recognizes may be received and recognized by another component, or the information that another component recognizes may be received and recognized by the control unit. As one example, the display unit of the other component may display a power usage amount and/or an energy usage rate.

According to this embodiment, if correction is necessary due to a difference between the predicted power usage amount stored in the memory unit and the actual power usage amount, the predicted power usage amount stored in the memory unit is changed into the actual power usage amount. Therefore, a more accurate predicted power usage amount may be displayed.

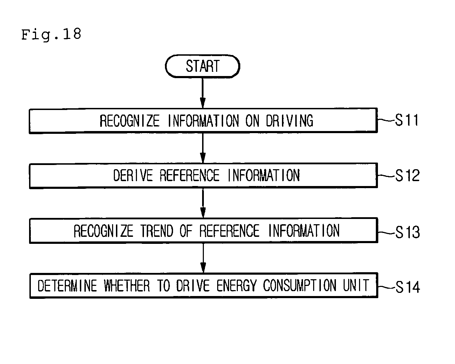

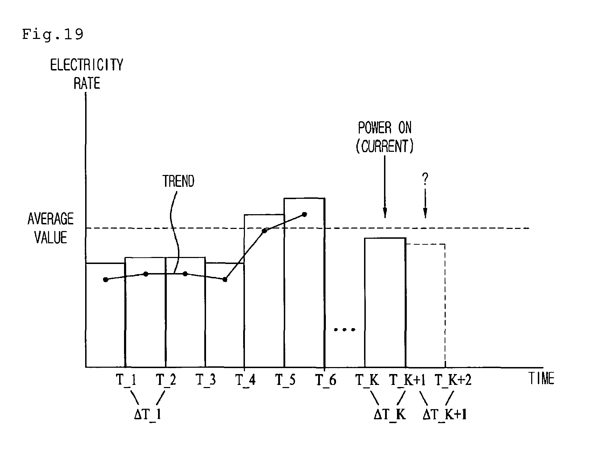

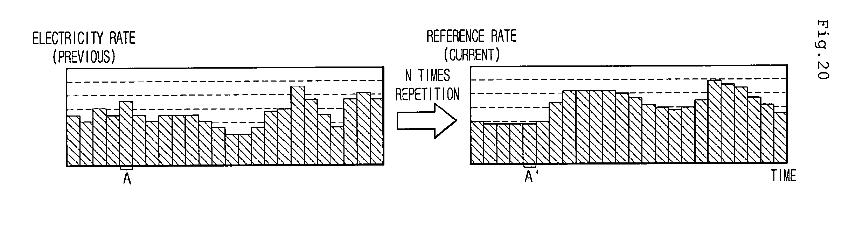

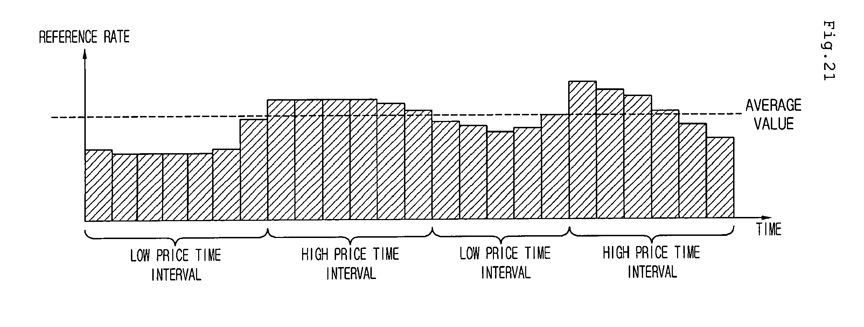

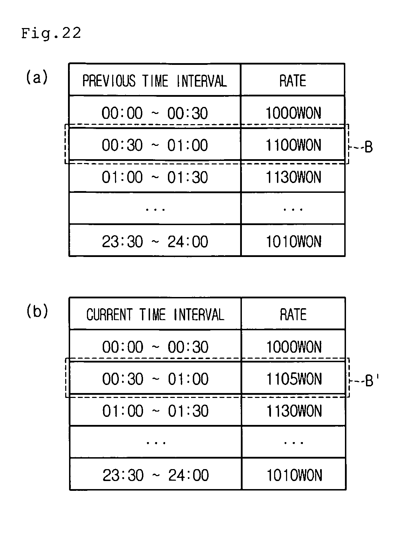

Fig. 18 is a flowchart illustrating a method of controlling an energy consumption unit according to a second embodiment of the present invention. Fig. 19 is a graph illustrating one example of power information. Fig. 20 is a graph illustrating reference information relating to the present invention. Fig. 21 is a graph illustrating a high price time interval and low price time interval relating to the present invention. Fig. 22 is a table illustrating reference information relating to the present invention.

Referring to Fig. 18, the method of controlling an energy consumption unit includes (a) recognizing information on at least one driving that includes an electricity rate for each time interval divided by a predetermined time interval in operation S11, (b) deriving reference information on each time interval from the recognized driving information in operation S12, (c) recognizing a trend of the reference information for a predetermined time interval in operation S13, and (d) determining whether to driving an energy consumption unit according to the trend of the reference information in operation S14.

Here, since the information on driving is described above, its detailed description will be omitted. The information on driving may include power information on a utility network and information on green energy (such as solar heat, wind power, and geothermal heat), and the information on green energy may include weather information and driving information on the energy generation unit 21. Here, the driving information of the energy generation unit 21 may include at least one of a power generation amount, a generation cost, and an electricity rate by reflecting weather information.

Additionally, the recognizing operation S11 may include collecting and obtaining information on driving and processing or determining information on the obtained information. Additionally, the collecting and obtaining of the information on driving may include receiving the information on driving from a utility network.

Additionally, the processing of the information on driving may include processing the information by one component (for example, an energy consumption unit and an energy management unit) of a home network or processing the information by a utility network.

Referring to Fig. 19, as mentioned above, an electricity rate may be changed by a period of a specific day, specific week, or specific month, and especially, an electricity rate may be changed according to a specific time on a specific day. Additionally, a utility network may transmit, to a home network, electricity rate information on each time interval divided into a predetermined time interval.

When a real time rate form is examined more in detail, a utility network newly prices an electricity rate at a subsequent time interval by a predetermined time interval and then transmits the electricity rate to a home network in real time. For example, a utility network transmits electricity rate information at a 5 min interval, and when the first timing T_1 is 9:00 a.m., the second timing T_2 is 9:05 a.m. Each of subsequent timings T_3 to T_6 and T_K to T_K+2 is increased from an earlier timing by 5 min. Each time between the first timing and the second timing is described as the first interval ΔT1, and an electricity rate at each timing in the first interval ΔT_1 is identical. Likewise, each time between the K(K>1) timing and the K+1 timing is described as the K interval ΔT1, and an electricity rate at each timing in the K interval ΔT_K is identical.

In a real time rate form, when the timing to turn on an energy consumption unit is in the K time interval ΔT_K, the energy consumption unit may recognize an electricity rate at the K time interval but nay not recognize an electricity rate at the K+1 time interval ΔT_K+1.

The method of controlling an energy consumption unit according to this embodiment includes deriving reference information on each time interval from information on driving, which is recognized in order to predict information (for example an electricity rate) on driving at the subsequent time interval. For example, the reference information represents a predicted value of an electricity rate at the subsequent time interval. Here, the deriving of the reference information may be performed by selecting at least one of power information on a corresponding time interval of a specific day, specific week, or a specific month.

For example, the reference information on the K+1 time interval ΔT_K+1, i.e. the subsequent time interval, may be determined as an electricity rate at the K+1 time interval ΔT_K+1 of a specific day (for example, yesterday), or may be determined as an electricity rate of the K+1 time interval ΔT_K+1 of a specific week or a specific month. Additionally, the deriving of the reference information may be performed by selecting a plurality of power information on a corresponding time interval of a specific day, specific week, or a specific month and by calculating an average value of the selected at least two power information. For example, an average value of electricity rates at the K+1 time interval ΔT_K+1 during a predetermined period (5 days or 7 days) may be calculated, and then the calculated average value may be selected as reference information.

Additionally, the deriving of the reference information includes calculating power information at each corresponding interval for the specific number of days with a moving average. For example, when a moving average value for 5 days is selected as reference information, the reference information is derived from electricity rates of the K+1 time interval ΔT_K+1 for last 5 days is derived, and when one day elapses, a moving average is calculated, excluding an electricity rate of the K+1 time interval ΔT_K+1 of the oldest day and including an electricity rate of the K+1 time interval ΔT_K+1 of one day before

Additionally, the calculating of the moving average may include: calculating a moving average value of pre-stored power information at each interval and power information at a recognized current time interval; and recognizing the calculated moving average value as reference information of a subsequent time interval.

Additionally, the calculating of the moving average value may include calculating an average by multiplying pre-stored power information at each interval and recognized power information at a current time interval by first and second weight values proportional to the importance. Additionally, the sum of the first and second weighted values is 1.

For example, referring to Fig. 22, (b) of Fig. 22 represents an electricity rate table for a current time interval (i.e. today) that an energy consumption is to be driven and (a) of Fig. 22 represents an electricity rate table for a previous time interval (i.e. yesterday).

Referring to (b) of Fig. 22, if the current time is 00:15, it is possible to recognize that an electricity rate is 1000 WON but it is impossible recognize an electricity rate after 00:30. Accordingly, the prediction of an electricity rate after 00:30 is required, and at this point, referring to (a) of Fig. 22, it is possible to recognize that the electricity rate of the previous time interval 00:30 ~ 01:00, B and predict an electricity rate after 00:30 in a current time interval. That is, after multiplying 1000 WON by the first weighted value and 1100 WON by the second weighted value, by averaging them, an electricity rate for a time interval after 00:30 may be predicted. At this point, the sum of the first and second weighted values may be 1 and if the first weighted value is 0.5, an electricity rate for 00:30 after a current time interval may be predicted as 1105 WON B'. Such a weighted value may be determined by a user or may be provided from a utility network. Additionally, the reference information may be directly set by a user, or may be provided from a utility network, or may be derived through a micom for controlling driving of a device.

Referring to Fig. 20, all current reference rates may be predicted using a previous electricity rate. Through several updating process with the above various averages, power information on a current A' time interval may be predicted from power information on a previous A' time interval.

Additionally, during the operation (b), reference information on current and at least one subsequent time interval may be derived and reference information on current and at least one previous time interval may be derived. Thus, when all electricity rates for entire time slots are predicted, it is apparent that this may be similarly used like power information of a schedule type.

Referring to Figs. 20 and 21, the method of controlling an energy consumption unit according to this embodiment may additionally include recognizing a high price time interval at which reference information is greater than a predetermined average value and a low price time interval at which reference information is less than a predetermined average value. The average value may include an average of power information on a specific day, a specific week, or a specific month.

Additionally, the recognizing of the high price time interval and the low price time interval includes recognizing them by comparing the power information provided to the energy consumption unit with the reference information set in the energy consumption unit or recognizing them by using information on a high price time interval and a low price time interval provided from the external of the energy consumption unit.

Moreover, the method of controlling an energy consumption unit according to this embodiment may include recognizing a trend of reference information during a predetermined time interval. That is, when reference information for each time interval is derived from the recognized power information, by recognizing a trend of the reference information about a time interval after the driving of the energy consumption unit, whether to drive the energy consumption unit is determined according to the trend of the reference information. For example, based on the comparison result of the reference information and the average value, even if the current time interval corresponds to the low price time interval, when the reference information corresponds to an increasing trend and it is predicted that a subsequent time interval corresponds to the high price interval, a device may not be driven. Additionally, when the reference information is on a decreasing trend and a current time interval is in an off-peak time interval, an energy consumption unit may be driven. Additionally, when the reference information is on an increasing trend and a subsequent time interval is in a low price time interval, an energy consumption unit may be driven. Additionally, when the reference information is on an increasing trend and a current time interval is in a low price time interval and a subsequent time interval is in a high price time interval, an energy consumption unit may be driven only at a current time interval. Additionally, when the reference information is on an increasing trend and a subsequent time interval is in a high price time interval, an energy consumption unit may not be driven.

Additionally, the determining of whether to drive the energy consumption unit may be inputted by a user or may be automatically performed by a micom. Additionally, it may further include displaying to an external the power information and the reference information to allow a user to recognize them.

Moreover, the determining of whether to drive the energy consumption unit may drive only some power consumption units among at least two power consumption units included in the energy consumption unit.

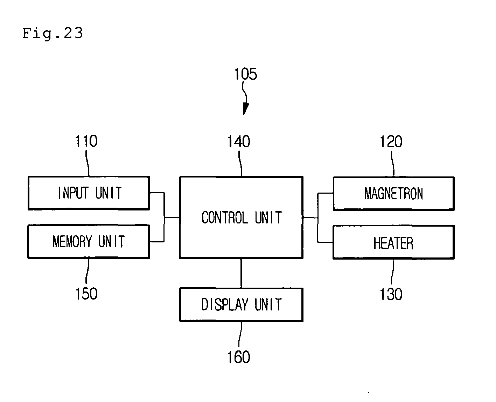

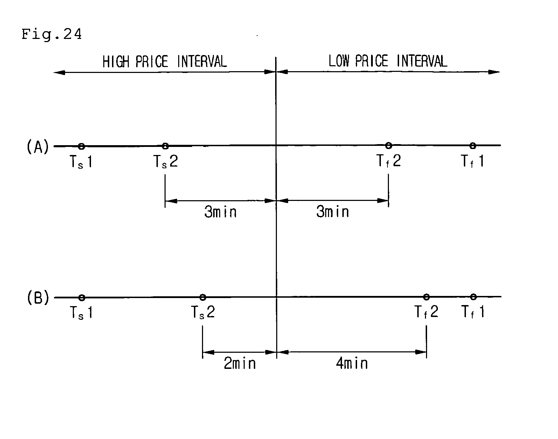

Fig. 23 is a block diagram illustrating a cooking appliance, i.e. one example of an energy consumption unit. Fig. 24 is a graph illustrating a rate change in power consumed for an operation of a cooking appliance according to a change in a power rate per unit power in the cooking appliance.

Referring to Figs. 23 and 24, the cooking appliance 105 includes an input unit 110, a plurality of heating sources, a control unit 140, a memory unit 150, and a display unit 160.

By using the input unit 110, at least one of a food type, a cooking temperature of food, and a cooking time may be inputted. Here, the cooking temperature and the cooking time may include a recipe for setting a direct temperature and a time format, or a cooking temperature and a cooking time, and a food type and amount.

Moreover, a command on a reservation operation of the cooking appliance 105 may be inputted through the input unit 110. Here, the reservation operation means an operation of the cooking appliance 105 for cooking the food within a reservation time that a user inputs. The inputted reservation time may be referred to as a driving factor. Accordingly, at least one reservation start time Ts1 and reservation end time Tf1 may be inputted using the input unit 110. Here, the reservation start time Ts1 and the reservation end time Tf1 do not mean a time at which the cooking of food starts and ends substantially. That is, the reservation start time Ts1 and the reservation end time Tf1 may be a desired time that the cooking of food starts and ends at a time between the reservation start time Ts1 and the reservation end time Tf1, in consideration of a user's meal time or the cooking of additional food. Moreover, a command on a reservation operation of the cooking appliance 105 at a cooking start time Ts2 and a cooking end time Tf2 described later may be inputted through the input unit 110.

Also, the heating source provides energy for cooking food in a cooking chamber. For example, the heating source may include at least one of a magnetron for emitting microwaves into the cooking chamber and a heater 130 for generating heat into the cooking chamber.

The control unit 140 may recognize a power amount and/or an energy usage rate used for operation of the cooking appliance 105. As one example, the control unit 140 may calculate an energy usage rate of the heating source.

Moreover, the control unit 140 calculates a cooking start time Ts2 and a cooking end time Tf2, which may minimize an energy usage rate depending on the cooking of food within a time range between a reservation start time Ts1 and a reservation end time Tf1 during an reservation operation of the cooking appliance 105. Herein, the cooking start time Ts2 and the cooking end time Tf2 are a time of when the cooking appliance 105 operates substantially, that is, a time of when an operation of the heating source starts and ends. At this point, the cooking start time and the cooking end time may be referred to as prediction result information relating to the driving of a component.

In more detail, the control unit 140 calculates the cooking start time Ts2 and the cooking end time Tf2, in order to allow an operating time of the heating source to be included in a low price time interval as much as possible in the time between the reservation start time Ts1 and the reservation end time Tf1 during an reservation operation.

Referring to Fig. 24, it is assumed that a power rate per unit power in a high price time interval and a power rate per unit power in a low price time interval are 60 WON/kW and 30 WON/kW, respectively, and also a high price time interval : a low price time interval in a time between the reservation start time Ts1 and the reservation end time Tf1 is 5 : 5. Also, it is assumed that an output of the heating source is 1000 W and an operating time of the heating source is 6 min.

Therefore, as shown in the graph (A), when an operation of the heating source is identically performed in a high price time and a low price time, a power rate used for the operation of the heating source may be calculated as below.

(1) graph (A)

1) high price interval

$$(3 \text{ min} * 1{,}000 \text{W}/60 \text{ min}) * 60 \text{ WON/kW} = 3{,}000 \text{ WON}$$

2) low price interval

$$(3 \text{ min} * 1{,}000W/60 \text{ min}) * 30 \text{ WON/kW} = 1{,}500 \text{ WON}$$

3) total usage rate

$$3{,}000 \text{ WON} + 1{,}500 \text{ WON} = 4{,}500 \text{ WON}$$

However, as shown in graph (B), when an operation of the heating source is performed for 2 min at a high price time and for 4 min at a low price time, a consumed power rate may be calculated as below according to an operation of the heating source.

(2) graph (B)

1) high price interval

$$(2 \text{ min} * 1{,}000W/60 \text{ min}) * 60 \text{ WON/kW} = 2{,}000 \text{ WON}$$

2) low price interval

$$(4 \text{ min} * 1{,}000W/60 \text{ min}) * 30 \text{ WON/kW} = 2{,}000 \text{ WON}$$

3) total usage rate

$$2{,}000 \text{ WON} + 2{,}000 \text{ WON} = 4{,}000 \text{ WON}$$

Accordingly, as an operating time of the heating source is substantially included more in a low price interval, a total energy usage rate for an operation of the cooking appliance 105 may be more reduced.

The control unit 140 may calculate the set cooking start time Ts2 and cooking end time Tf2, and a power usage amount and/or an energy usage rate resulting from an operation of the heating source according to the cooking start time Ts2 and the cooking end time Tf2, and then, may display the calculated information on a display unit. Also the control unit 140 may control an operation of the heating source to start at the cooking start time Ts2 and end at the cooking end time Tf2.

Additionally, when an energy usage rate is excessive due to an operation of the heating source in a time between the reservation start time Ts1 and the reservation end time Tf1, the control unit 140 may require a user to provide an input on whether to execute a reservation operation or a new reservation time. For example, when a time between the reservation start time Ts1 and the reservation end time Tf1 is completely included in a high price time interval, an energy usage rate may be excessive due to an operation of the cooking appliance 105. In such a case, the control unit 140 may require a user to provide an input on whether to execute a reservation operation or a new reservation time, i.e. an input on the reservation start time Ts1 and the reservation end time Tf1.

Also, the memory unit 150 stores information on a power rate per unit power. Additionally, the data storage unit 150 may store data relating to power consumption due to an operation of the cooking appliance, which is calculated by the control unit 140.

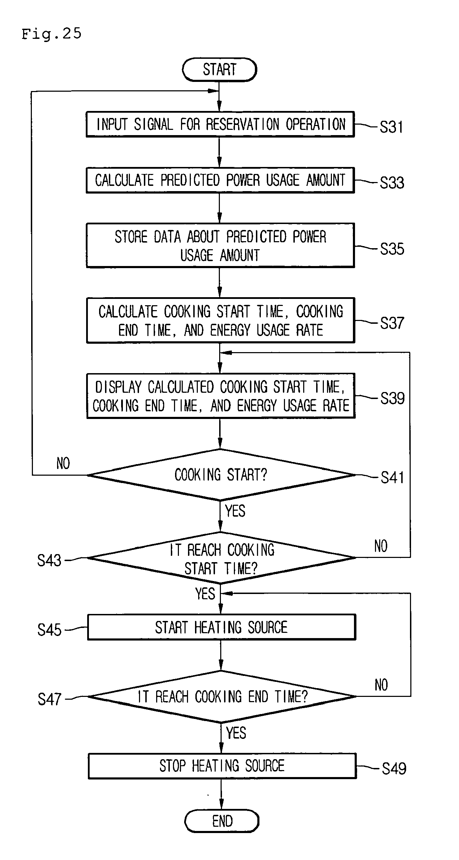

FIG. 25 is a flowchart illustrating a method of controlling an energy consumption unit according to a third embodiment of the present invention. Referring to Fig. 25, a cooking appliance will be described as one example of an energy consumption unit.

Referring to Fig. 25, an input unit 110 receives a signal for a reservation operation of the cooking appliance 105. Also, the control unit 140 calculates a predicted power usage amount due to an operation of the cooking appliance 105 in response to the signal that the input unit 110 receives in operation S33, and also stores the calculated predicted power usage amount in the memory unit 150.

Then, the control unit 140 calculates a cooking start time Ts2 and a cooking end time Tf2, which may minimize an energy usage rate of the cooking appliance 105, and calculates an energy usage rate according thereto in operation S37. Also, the display unit 160 may display the calculated cooking start time Ts2, cooking end time Tf2, and power rate in operation S39.

Moreover, when the calculated cooking start time Ts2, cooking end time Tf2, and power rate are displayed in operation S39, the control unit 140 determines whether to start cooking in operation S41. The determining of whether to start cooking in operation S41 may not be necessary when cooking starts automatically. However, if an energy usage rate due to an operation of a heating source is excessive between the cooking start time Ts2 and the cooking end time Tf2, or the cooking start time Ts2 and the cooking end time Tf2 are set to be out of the reservation start time Ts1 and the reservation end time Tf1 in order to reduce an energy usage rate, only when a user allows to start cooking with the cooking start time Ts2 and the cooking end time Tf2, cooking may start.

Also, when it is determined in operation S39 that the cooking starts, the control unit 140 determines whether it reaches the cooking start time Ts2 in operation S43. If it is determined in operation S43 that it reaches the cooking start time Ts2, the control unit 140 controls a heating source to operate in operation S45.

Then, the control unit 140 determines whether it reaches the cooking end time Tf2 in operation S47. If it is determined in operation S47 that it reaches the cooking end time Tf2, the control unit 140 controls the heating source to stop in operation S49.

The above embodiment describes a cooking appliance, but the scope of this embodiment may be applied to a washing machine as it is. For example, when a reservation operation command on a washing machine is inputted, a reservation start time and a reservation end time, which minimize an energy usage rate, may be displayed on a display unit, or the washing machine may be driven to satisfy the reservation start time and the reservation end time.

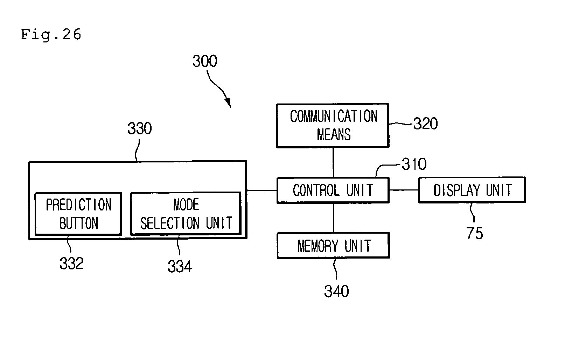

Fig. 26 is a block diagram illustrating a schematic configuration of an energy consumption unit according to a fourth embodiment of the present invention.

Referring to Fig. 26, the energy consumption unit 300 includes a control unit 310, a communication means 320 for communicating with another component, an input unit 330 for inputting a driving condition, a display unit for displaying energy information and/or additional information, and a memory unit 230 for storing energy information and/or additional information relating to the inputted driving condition.

In more detail, the input unit 330 includes a mode selection unit 334 for selecting by a user a driving mode or a driving condition of an energy consumption unit and a prediction button 332 for predicting energy information and additional information relating to a driving mode that a user selects. The driving mode may include a plurality of fixed modes previously set during manufacturing of the energy consumption unit 300 and a user selection mode set and stored by a user. In each of the fixed modes, a method of driving the energy consumption unit and/or detailed components constituting the energy consumption unit is predetermined. On the other hand, a user selection mode is determined as a user inputs a condition relating to the driving of the energy consumption unit and/or the detailed component.

As one example, when the energy consumption unit is a washing machine or a dish washer, a user may select whether to drive (if there are a plurality of components, the number of driven components) and driving conditions (RPM, time, output, and so on) of at least one detailed component, a water temperature, a total washing time, a washing time for each cycle, a washing water usage amount, and the number of rinsing. As another example, if the energy consumption unit is a cooking appliance, whether to drive and driving condition of at least one detailed component, a total cooking time, and a cooking temperature may be selected.

When a user inputs a start command after inputting a condition relating to driving of the energy consumption unit, the energy consumption unit is driven in correspondence to the inputted condition.

Additionally, when a user selects the prediction button 332 after inputting the condition relating to the driving of the energy consumption unit, the control unit predicts energy information and/or additional information when the energy consumption unit is driven with the inputted driving condition (prediction information on a result for the driving of the component). Then, the predicted energy information and/or additional information may be displayed on the display unit 350.

In more detail, the memory unit 340 stores energy information and/or additional information relating to the driving of each of a plurality of detailed components (basic energy information and/or additional information for prediction).

As one example, when the energy consumption unit is a washing machine, energy information and/or additional information on whether to drive (if there are a plurality of components, the number of driven components) and driving conditions (RPM, time, output, and so on) of at least one detailed component, a warm water temperature (a target value according to the driving of a detailed component), a total washing time, and a washing time for each cycle may be stored. At this point, a condition that a user selects in relation to a detailed component may be referred to as a driving factor.

The energy information stored in the memory unit is information relating to energy consumption, and predicted result information is information including at least one of total energy consumption amount information and energy usage rate information during the driving of a component. Predicted additional information may include performance information (or efficiency information) or function performance completion information when the component is driven with the condition that a user selects.

At this point, the memory unit 340 may store energy information relating to a plurality of driving factors in a table. Since an electricity rate may vary with time, the memory unit stores power information when at least one detailed component is driven, and the control unit 310 may calculate an energy usage rate by using electricity rate information and the power information. Of course, the memory unit 74 stores energy information when a component is driven in a fixed mode.

Accordingly, a user may confirm predicted energy information and predicted additional information when a component is driven with a condition that a user selects. Accordingly, a user confirms predicted information in order to determine whether to start driving or reset the condition, so that the condition for reducing an energy usage rate or improving a function performance completion may be found.

Also, driving mode information (driving factor information) relating to the predicted information may be stored in the memory unit 340 by using the mode selection unit. The driving mode stored in the memory unit 340 in relation to the predicted information may be referred to as a user selection mode. At this point, the memory unit may store a plurality of user selection modes.

Then when a user selects a specific user selection mode by using the mode selection unit, an energy consumption unit may be driven in the selected mode.

In brief, when a user inputs a driving condition of an energy consumption unit and selects a prediction button, the control unit performs simulation by using the inputted condition in order to predict energy information and additional information relating to the inputted driving condition.

According to the present invention, since energy information and additional information relating to a driving condition that a user selects are predicted, a user may easily confirm energy information and additional information about a condition that a user wants, so that a user's driving selection width may be increased and convenience may be improved.

When a prediction button is selected, result information relating to the driving of an energy consumption unit is predicted. However, unlike this, when a driving start command on an energy consumption is inputted, result information relating to the driving of the energy consumption unit may be predicted and displayed. After that, when a user inputs a start command again, the energy consumption unit may be driven in a selected mode.

Moreover, after the energy consumption unit is driven in the selected mode, result information on driving may be displayed on a display unit. That is, at least one of an actual power usage amount, an actual energy usage rate, an actual driving performance, a function performance completion may be displayed on a display unit. At this point, an actual driving performance or a function performance completion may be sensed by a sensor equipped in an energy consumption unit. At this point, if predicted result information and actual result information are different, the predicted result information may be changed into the actual result information automatically or by a user's selection.

Or, since the predicted performance or function performance completion may be different from an actual driving performance or function performance completion, a user may change the predicted driving performance or function performance completion. For example, although it is determined that a predicted function performance completion of when a washing machine is driven in a specific mode is 80 % on the basis of 100 %, if a user recognizes it as 90 %, a predicted function performance completion of when a washing machine is driven in the specific mode may be set to 90 %.

Or, since the sensed performance or function performance completion after driving completion may be different from an actual driving performance or function performance completion that a user recognizes, a user may change the sensed driving performance or function performance completion after driving completion.

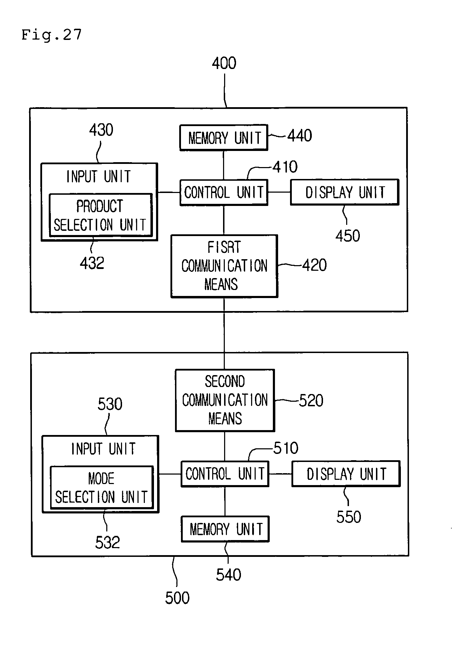

Fig. 27 is a block diagram illustrating each configuration of an energy consumption unit according to a fifth embodiment of the present invention and a specific component communicating with the energy consumption unit.

Referring to Fig. 27, an energy consumption unit 500 (or referred to as a second component) may communicate with a specific component 400 (or referred to as a first component). In this embodiment, the specific component 400 may be one of an energy management unit, an energy measurement unit, a central management unit, and an energy network assistance unit, which constitute a home network.

In Fig. 27, one energy consumption unit communicates with a specific component, but a plurality of energy consumption units may communicate with the specific component.

Additionally, prediction on energy information and additional information relating to the driving of the energy consumption unit 500 may be performed in the specific component 400, and the predicted information and driving condition information relating thereto may be delivered to the energy consumption unit 500.

In more detail, the specific component 400 may include a control unit 410, a first communication means 420, an input unit 430, a memory unit 440, and a display unit 450. The input unit 430 includes a product selection unit 432 for selecting a type of an electrical product, i.e. as one example of an energy consumption unit, and the prediction button and the mode selection unit described with reference to Fig. 26. The memory unit 440 may store energy information relating to a plurality of driving factors for each product in a table. The display unit 450 displays predicted energy information and/or additional information.

The energy consumption unit 500 may include a control unit 510, a second communication means 520 communicating with the first communication means 520, an input unit 530, a memory unit 440, and a display unit 550. The memory unit 540 may store driving condition information relating to the information predicted in the specific component 400. That is, the memory unit may store a plurality of user selection modes. The display unit 550 may display predicted energy information and/or additional information.

According to an embodiment, since a specific component predicts energy information and additional information on each of a plurality of energy consumption units, a user's convenience may be improved.

According to embodiments of the present invention, an energy source may be effectively managed.

## Claims

1. A method of controlling a component for a network system, which communicates with another component, the method comprising:

   inputting a driving factor of the component or the other component; and
   predicting result information when the component or the other component is driven based on the inputted driving factor.

2. The method according to claim 1, wherein the predicted result information comprises at least one of a predicted power usage amount, a predicted energy usage rate, a predicted driving performance, and a predicted function performance completion.

3. The method according to claim 1, wherein the predicted result information comprises at least one of an operation start time and an operation end time.

4. The method according to claim 1, wherein a memory unit of the component or the other component stores basic information for predicting result information when the component is driven based on the driving factor inputted through the input unit.

5. The method according to claim 4, wherein the basic information comprises power information relating to the inputted driving factor.

6. The method according to claim 4, wherein the driving factor comprises a driving course of the component or the other component.

7. The method according to claim 6, wherein the memory unit stores a predicted power usage amount corresponding to the driving course of the component or the other component.

8. The method according to claim 4, wherein the driving factor comprises at least one of whether to drive, the number of driving, a driving condition, a driving time, and a target value according to driving of at least one energy consumption unit constituting the component.

9. The method according to claim 8, wherein the memory unit stores power information on the at least one energy consumption.

10. The method according to claim 1, further comprising a display unit for displaying the result information.

11. The method according to claim 10, wherein a driving factor corresponding to the result information displayed on the display unit, as a user selection mode, is stored in the memory unit of the component or the other component.

12. The method according to claim 10, wherein the user selection mode stored in the memory unit is selected through an input unit of the component or the other component.

13. The method according to claim 1, further comprising recognizing result information when the component or the other component is actually driven as the driving factor.

14. The method according to claim 13, wherein predicted result information is corrected using actual result information and then is stored in the memory unit of the component or the other component.

15. A component for network system, which communicates with another component, the component comprising:

   an input unit for inputting a driving factor of the component;
   a memory unit for storing basic information for predicting result information when the component is driven based on the driving factor inputted through the input unit; and
   a control unit for predicting result information when the component is driven based on the basic information stored in the memory unit.

16. The component according to claim 15, wherein the predicted result information comprises at least one of a predicted power usage amount, a predicted energy usage rate, a predicted driving performance, and a predicted function performance completion.

17. The component according to claim 15, wherein the input unit comprises a prediction button for inputting a command for prediction on the result information.

18. A component for network system, which communicates with another component, the component comprising:

   an input unit for inputting a driving factor of the other component;
   a memory unit for storing basic information for predicting result information when the other component is driven based on the driving factor inputted through the input unit; and
   a control unit for predicting result information when the component is driven based on the basic information stored in the memory unit.

19. The component according to claim 18, wherein the predicted result information comprises at least one of a predicted power usage amount, a predicted energy usage rate, a predicted driving performance, and a predicted function performance completion.

20. The component according to claim 18, wherein predicted result information is transmitted to the other component.

Fig.1

Power plant — Power transmission — (EMS): Energy management system (EMS) — Advanced metering infrastructure (AMI) — Storage apparatus — Substation — Smart meter — Echo-friendly (fuel cell) — Power plant — Power transmission — Echo-friendly (sunlight) — Renewable (wind power) — Storage apparatus — Smart meter — PHEV — Echo-friendly (sunlight) — Echo-friendly (fuel cell) — Smart meter

Fig.2

10

20

```
┌──────────────────────────────┐        ┌──────────────────────────────┐
│      Utility Area Network     │        │       Home Area Network       │
│                               │        │                               │
11─┤ Energy generation component │       │ Energy generation component ├─21
12─┤ Energy distribution component│      │ Energy distribution component├─22
13─┤ Energy storage component     │      │ Energy storage component ├─23
14─┤ Energy management component  │      │ Energy management component ├─24
15─┤ Energy metering component    │      │ Energy metering component ├─25
│                               │        │ Energy consumption component ├─26
│                               │        │                               │
│                               │        │ Central management component ├─27
│                               │        │ Energy grid assistance component├─28
└──────────────────────────────┘        └──────────────────────────────┘
```

Fig.3

Fig.4

Fig.5

51,52

513

| First memory | —514 |
| Second memory | —515 |

| processor | —516 |

| First communication part | —511 |

| Second communication part | —512 |

| Power supply | —517 |

Fig.6

Fig.7

Fig.8

Fig.9

70

| Central manager | 710 |

720
726

| First API | Second API | Third API | 726 |

722
724

740 — Local manager

750 — Interpreter

| First communication part | Second communication part | Third communication part | 760 |

762            764            766

Fig.10

92
First
component

94
Second
component

96
Third
component

98
Fourth
component

Fig.11

Fig.12

Fig.13

Fig.14

| | | HEATER | MOTOR | · · · | LIGHT SOURCE UNIT | TOTAL PREDICTED USAGE AMOUNT | (A,W,kwh,RATE) |
|---|---|---|---|---|---|---|---|
| COOKING APPLIACNE | THAWING | A | B | | X | Y | Z |
| | ⋮ | | | | | | |
| | WARMING | A1 | B1 | | X1 | Y1 | Z1 |
| | | · | · | · | · | · | · |
| | | · | · | · | · | · | · |
| | | · | · | · | · | · | · |
| | | · | · | · | · | · | · |
| | | · | · | · | · | · | · |
| | | · | · | · | · | · | · |
| | | · | · | · | · | · | · |
| WASHING MACHINE | NORMAL | | | | | | |
| | ⋮ | | | | | | |
| | BLANKET | An | Bn | Xn | Xn | Yn | Zn |

Fig.15

26

```
             ┌────────────────────────────────────────┐
             │                                        │
262 ───┐     │  ┌──────────────┐                      │
        ───  │  │ MEMORY UNIT  │                      │
             │  └──────────────┘                      │
             │         │                              │
261 ───┐     │  ┌──────────────┐      ┌─────────────────────┐
        ───  │  │ CONTROL UNIT │──────│ COMMUNICATION MEANS │
             │  └──────────────┘      └─────────────────────┘
             │         │                              │
             │                              263       │
264 ───┐     │  ┌──────────────┐                      │
        ───  │  │ DISPLAY UNIT │                      │
             │  └──────────────┘                      │
             └────────────────────────────────────────┘
```

Fig.16

| COURSE | LAUNDRY WEIGHT | TEMPERATURE | PREDICTED POWER USAGE AMOUNT |
|---|---|---|---|
| NORMAL | A1 | B1 | C1 kw |
| | ⋮ | | |
| | An | Bn | Cn kw |
| ⋮ | | | |
| BLANKET | D1 | E1 | F1 kw |
| | ⋮ | ⋮ | |
| | Dn | E2 | Fn kw |

Fig.17

START

S1 — RECOGNIZE INPUTTED COURSE

S2 — RECOGNIZE PREDICTED POWER USAGE AMOUNT CORRESPONDING TO INPUTTED COURSE

S3 — RECOGNIZE PREDICTED ENERGY USAGE RATE CORRESPONDING TO INPUTTED COURSE

S4 — DISPLAY PREDICTED ENERGY USAGE RATE

S5 — PERFORM INPUTTED COURSE

S6 — RECOGNIZE ACTUAL POWER USAGE AMOUNT

S7 — COURSE COMPLETED? NO

YES

S8 — COMPARE PREDICTED POWER USAGE AMOUNT WITH ACTUAL POWER USAGE AMOUNT

S9 — CORRECTION OF PREDICTE POWER USAGE AMOUNT NECESSARY? NO

YES

S10 — CORRECT PREDICTED POWER USAGE AMOUNT

END

Fig.18

```
                    ┌─────────┐
                    │  START  │
                    └─────────┘
                         │
                         ▼
    ┌─────────────────────────────────────────┐
    │   RECOGNIZE INFORMATION ON DRIVING       │──S11
    └─────────────────────────────────────────┘
                         │
                         ▼
    ┌─────────────────────────────────────────┐
    │      DERIVE REFERENCE INFORMATION        │──S12
    └─────────────────────────────────────────┘
                         │
                         ▼
    ┌─────────────────────────────────────────┐
    │  RECOGNIZE TREND OF REFERENCE INFORMATION│──S13
    └─────────────────────────────────────────┘
                         │
                         ▼
  ┌───────────────────────────────────────────────┐
  │ DETERMINE WHETHER TO DRIVE ENERGY CONSUMPTION UNIT│──S14
  └───────────────────────────────────────────────┘
```

Fig.19

Fig.20

Fig.21

Fig.22

(a)

| PREVIOUS TIME INTERVAL | RATE |
|---|---|
| 00:00 ~ 00:30 | 1000WON |
| 00:30 ~ 01:00 | 1100WON |
| 01:00 ~ 01:30 | 1130WON |
| ... | ... |
| 23:30 ~ 24:00 | 1010WON |

--B

(b)

| CURRENT TIME INTERVAL | RATE |
|---|---|
| 00:00 ~ 00:30 | 1000WON |
| 00:30 ~ 01:00 | 1105WON |
| 01:00 ~ 01:30 | 1130WON |
| ... | ... |
| 23:30 ~ 24:00 | 1010WON |

--B'

Fig.23

105

110

140

120

INPUT UNIT

CONTROL UNIT

MAGNETRON

MEMORY UNIT

HEATER

150

DISPLAY UNIT

130

160

Fig.24

Fig.25

```
                    ┌─────────┐
                    │  START  │
                    └─────────┘
                         │
                         ▼
         ┌────────────────────────────────────┐
         │ INPUT SIGNAL FOR RESERVATION OPERATION │──── S31
         └────────────────────────────────────┘
                         │
                         ▼
         ┌────────────────────────────────────┐
         │ CALCULATE PREDICTED POWER USAGE AMOUNT │──── S33
         └────────────────────────────────────┘
                         │
                         ▼
         ┌────────────────────────────────────┐
         │  STORE DATA ABOUT PREDICTED POWER   │──── S35
         │           USAGE AMOUNT             │
         └────────────────────────────────────┘
                         │
                         ▼
         ┌────────────────────────────────────┐
         │ CALCULATE COOKING START TIME, COOKING │──── S37
         │  END TIME, AND ENERGY USAGE RATE   │
         └────────────────────────────────────┘
                         │
                         ▼
         ┌────────────────────────────────────┐
         │ DISPLAY CALCULATED COOKING START TIME, │──── S39
         │ COOKING END TIME, AND ENERGY USAGE RATE │
         └────────────────────────────────────┘
                         │
                         ▼
    NO          ◇ COOKING START? ◇──── S41
    ◀───────────
                        YES
                         │
                         ▼
    S43 ────◇ IT REACH COOKING   ◇──── NO
             STDART TIME?
                        YES
                         │
                         ▼
    S45 ──── │ START HEATING SOURCE │
                         │
                         ▼
    S47 ────◇ IT REACH COOKING END TIME? ◇──── NO
                        YES
                         │
                         ▼
         │ STOP HEATING SOURCE │──── S49
                         │
                         ▼
                    ┌─────────┐
                    │   END   │
                    └─────────┘
```

Fig.26

300

COMMUNICATION
MEANS —320

330

┌─────────────────────────────┐
│  ┌─────────────┐  ┌─────────────┐  │
│  │ PREDICTION  │  │    MODE     │  │
│  │   BUTTON    │  │SELECTION UNIT│  │
│  └─────────────┘  └─────────────┘  │
└─────────────────────────────┘

CONTROL UNIT ——310

DISPLAY UNIT

75

MEMORY UNIT

332          334

340

Fig.27

400

430      MEMORY UNIT — 440

410

| INPUT UNIT | CONTROL UNIT | DISPLAY UNIT |

PRODUCT
SELECTION UNIT

432

FISRT
COMMUNICATION
MEANS — 420

450

SECOND
COMMUNICATION
MEANS — 520

530

510

| INPUT UNIT | CONTROL UNIT | DISPLAY UNIT |

MODE
SELECTION UNIT

532

MEMORY UNIT

550

540

500